(19) Europäisches Patentamt
European Patent Office
Office européen des brevets

(11) **EP 4 443 955 B1**

(12) **EUROPEAN PATENT SPECIFICATION**

(45) Date of publication and mention
of the grant of the patent:
**09.07.2025 Bulletin 2025/28**

(51) International Patent Classification (IPC):
***H04W 52/50*** (2009.01)     ***H04W 74/0833*** (2024.01)
***H04W 74/0836*** (2024.01)

(21) Application number: **24189991.3**

(52) Cooperative Patent Classification (CPC):
**H04W 52/50; H04W 74/0833;** H04W 74/0836

(22) Date of filing: **19.12.2019**

(54) **TERMINAL AND TRANSMISSION METHOD**

ENDGERÄT UND ÜBERTRAGUNGSVERFAHREN

TERMINAL ET PROCÉDÉ DE TRANSMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.03.2019 JP 2019061490**

(43) Date of publication of application:
**09.10.2024 Bulletin 2024/41**

(60) Divisional application:
**25180141.1**

(62) Document number(s) of the earlier application(s) in
accordance with Art. 76 EPC:
**19921043.6 / 3 952 427**

(73) Proprietor: **Panasonic Intellectual Property
Corporation
of America
Torrance, CA 90504 (US)**

(72) Inventors:
• **YAMAMOTO, Tetsuya
Osaka, 540-6207 (JP)**
• **SUZUKI, Hidetoshi
Osaka, 540-6207 (JP)**
• **NISHIO, Akihiko
Osaka, 540-6207 (JP)**
• **HORIUCHI, Ayako
Osaka, 540-6207 (JP)**

(74) Representative: **Grünecker Patent- und
Rechtsanwälte
PartG mbB
Leopoldstraße 4
80802 München (DE)**

(56) References cited:
**US-A1- 2018 279 376**

• **ZTE ET AL: "Considerations on 2-Step RACH
Procedures", 3GPP DRAFT; R1-1901627, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, 16 February 2019
(2019-02-16), pages 1 - 11, XP051599324**
• **ZTE: "Summary of 7.2.1.2 Procedure for Two-
step RACH", 3 March 2019 (2019-03-03), pages 1 -
12, XP051690820, Retrieved from the Internet
<URL:http://www.3gpp.org/ftp/tsg%5Fran/WG1%
5FRL1/TSGR1%5F96/Docs/R1%2D1903436%
2Ezip>**

**Description**

Technical Field

The present disclosure relates to a terminal and a transmission method.

Background Art

In 3rd Generation Partnership Project (3GPP), the specification for Release 15 New Radio access technology (NR) has been completed for realization of the 5th Generation mobile communication systems (5G). NR supports functions for realizing Ultra Reliable and Low Latency Communication (URLLC) in conjunction with high speed and high capacity that are basic requirements for enhanced Mobile Broadband (eMBB) (see, e.g., Non-Patent Literatures (hereinafter referred to as "NPLs") 1 to 7).

Citation List

Non-Patent Literature

NPL 1
3GPP TS 38.211 V15.4.0, "NR; Physical channels and modulation (Release 15)," December 2018.
NPL 2
3GPP TS 38.212 V15.4.0, "NR; Multiplexing and channel coding (Release 15)," December 2018.
NPL 3
3GPP TS 38.213 V15.4.0, "NR; Physical layer procedure for control (Release 15),"
NPL 4
3GPP TS 38.214 V15.4.0, "NR; Physical layer procedures for data (Release 15)," December 2018.
NPL 5
3GPP TS 38.300 V15.4.0, "NR; NR and NG-RAN overall description; Stage 2 (Release 15)," December 2018.
NPL 6
3GPP TS 38.321 V15.4.0, "NR; Medium access control (MAC) protocol specification (Release 15)," December 2018.
NPL 7
3GPP TS 38.331 V15.4.0, "NR; Radio resource control (RRC) protocol specification (Release 15)," December 2018.
NPL 8
B. Bertenyi, S. Nagata, H. Kooropaty, X. Zhou, W. Chen, Y. Kim, X. Dai, and X. Xu, "5G NR radio interface," Journal of ICT, Vol. 6 and 2, pp. 31-58, 2018.
NPL 9
RP-182881, "New work item: 2-step RACH for NR," ZTE Corporation, Sanechips, December 2018.

US 2018/279376 A1 describes systems, apparatuses and methods for wireless communications. Random access procedures may include various steps, such as 4-steps or 2-steps. One or more indicators such as, for example, transmission power requirements, may be used to indicate which random access procedure to utilize.
ZTE, SANECHIPS, "Considerations on 2-Step RACH Procedures", 3GPP Draft; R1-1901627, February 16, 2019, dis- cusses the related topics of 2-step RACH procedure consisting of procedure of msgA, msgB, power control, fall back mechanism (to 4-step RACH), and other related procedure issues.

Summary of Invention

However, random access processing has not comprehensively been studied.
One non-limiting and exemplary embodiment of the present disclosure facilitates providing a terminal and a transmission method capable of improving the efficiency of random access processing.
According to an exemplary embodiment of the present disclosure, it is possible to improve the efficiency of random access processing.
Additional benefits and advantages of the disclosed exemplary embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an exemplary 4-step Random access procedure;

FIG. 2 illustrates an exemplary 2-step Random access procedure;

FIG. 3 is a block diagram illustrating a configuration example of a part of a terminal according to Embodiment 1;

FIG. 4 is a block diagram illustrating a configuration example of a base station;

FIG. 5 is a block diagram illustrating a configuration example of the terminal;

FIG. 6 illustrates an exemplary Random access procedure;

FIG. 7 is a sequence diagram illustrating an operation example of the base station and the terminal;

FIG. 8 is a sequence diagram illustrating an operation example of the base station and the terminal;

FIG. 9 illustrates an exemplary Random access procedure;

FIG. 10 illustrates an exemplary Random access procedure according to Embodiment 4;

FIG. 11 illustrates a configuration example of TDMed Message A; and

FIG. 12 illustrates a configuration example of FDMed Message A.

Description of Embodiments

Hereinafter, embodiments of the present disclosure will be described in detail with reference to the accompanying drawings.

[Random access procedure]

In Release 15 NR, a terminal (also referred to as "mobile station" or "User Equipment (UE)") transmits a random access signal (also referred to as "Random Access Channel (RACH)" or "Physical RACH (PRACH)") to a base station (also referred to as "gNB" or "eNB"), for example, in the following cases:

(1) At the time of initial access (e.g., when transiting from an RRC_IDLE state to an RRC_CONNECTED state)
(2) When resuming from an RRC_INACTIVE state to the RRC_CONNECTED state
(3) When downlink data or uplink data is generated during connection (e.g., when an uplink synchronization status is "non-synchronized" in the RRC_CONNECTED status)
(4) When requesting on-demand System Information (SI)
(5) When recovering from beam-connection failure (Beam failure recovery (BFR)).

By the transmission of the random access channel signal, connection or reestablishment of synchronization by the terminal with the base station is attempted. A series of operations performed for such connection or reestablishment of synchronization by the terminal with the base station are called a "Random access procedure."

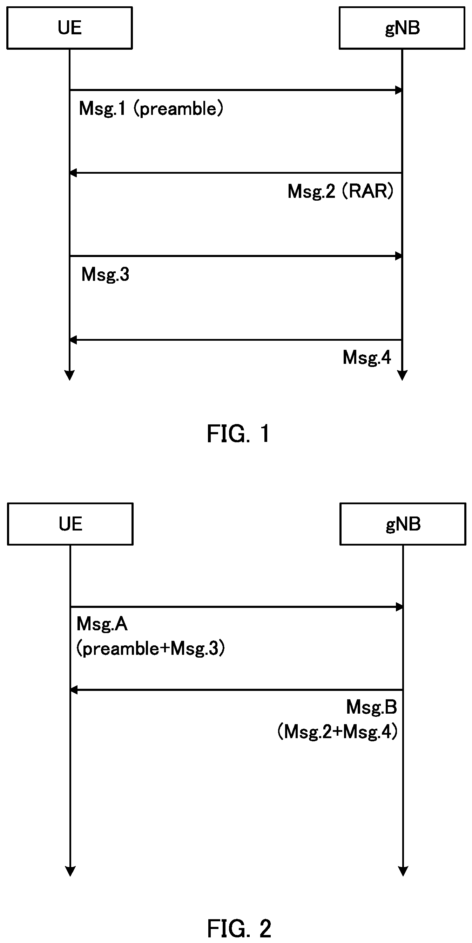

In Release 15 NR, the Random access procedure is composed of, for example, four steps illustrated in FIG. 1 (referred to as "4-step Random access procedure" or "4-step RACH procedure") (see, e.g., NPL 8).

<Step 1: Transmission of Message 1>

The terminal (e.g., UE) randomly selects a PRACH preamble resource to be actually used, from a set of resource candidates (e.g., resources specified by a combination of time resources, frequency resources, and sequence resources) for a preamble signal (hereinafter, referred to as "RACH preamble," "PRACH preamble," or simply as "preamble"). Then, the terminal transmits the PRACH preamble to the base station (e.g., gNB) using the selected PRACH preamble resource.

The PRACH preamble may be referred to as "Message 1," for example.

<Step 2: Transmission of Message 2>

When detecting the PRACH preamble, the base station transmits a RACH response (also referred to as "Random Access Response (RAR)"). The RAR may be referred to as "Message 2," for example. Note that, at this point, the base station cannot identify the terminal having transmitted the PRACH preamble. Thus, the RAR is transmitted, for example, entirely in a cell covered by the base station.

The RAR includes, for example, information on a resource (uplink resource) used by the terminal for transmission of an uplink signal (Step 3: transmission of Message 3), or information on a transmission timing of uplink transmission by the terminal. Here, when the terminal having transmitted the PRACH preamble does not receive the RAR within a specified period (e.g., called a RAR reception window) starting from the transmission timing of the PRACH preamble, the terminal again selects the PRACH preamble resource and transmits the PRACH preamble (in other words, retransmission of Message 1).

<Step 3: Transmission of Message 3>

The terminal transmits "Message 3" including, for example, an Radio Resource Control (RRC) connection request, a scheduling request, or the like using an uplink resource indicated by the base station by the RAR.

<Step 4: Transmission of Message 4>

The base station transmits, to the terminal, a message (called "Message 4") including identification information (e.g., UE-ID) for identifying the terminal. The base station transmits Message 4 to confirm that there is no contention between multiple terminals (contention resolution). Note that, for example, a Cell-Radio Network Temporary Identifier (C-RNTI), Temporary C-RNTI, or the like may be used as the UE-ID.

One example of the 4-step Random access procedure has been described above.

As for Release 16 NR, in order to efficiently perform connection or reestablishment of synchronization by the terminal with the base station with low latency, a Random access procedure composed of two steps, for example, illustrated in FIG. 2 (which may also be referred to as "2-step Random access procedure" or "2-step RACH procedure") has been studied (e.g., see NPL 9).

<Step 1: Transmission of Message A>

The terminal transmits, to the base station, a message (hereinafter, referred to as "Message A") including information corresponding to Message 1 (in other words, preamble) and Message 3 corresponding to Step 1 and Step 3 of the 4-step Random access procedure (see, e.g., FIG. 1).

<Step 2: Transmission of Message B>

When detecting Message A, the base station transmits Message B. Message B includes, for example, information corresponding to Message 2 or Message 4 of the 4-step Random access procedure (see, e.g., FIG. 1) (e.g., the information of one or both of Messages 2 and 4).

[Transmit Power Control in Random Access Procedure]

In the 4-step Random access procedure in NR, Transmit Power Control (TPC) is performed for transmission of Message 1 and Message 3. For example, transmit power $P_{PRACH}$ for the PRACH preamble transmitted in Message 1 is obtained according to following Equation 1 (see, e.g., NPL 3):

$$P_{PRACH} = \min\{P_{CMAX}, P_{PRACH\_target} + PL\} \qquad \dots \text{(Equation 1)}.$$

Here, $P_{CMAX}$ indicates the maximum transmit power at which the terminal is capable of transmission, $P_{PRACH\_target}$ indicates a target received power value for the PRACH preamble (e.g., a parameter configured by the base station), and PL indicates a path loss level measured by the terminal.

Further, transmit power $P_{PUSCH}$ of a data signal (e.g., uplink data channel (e.g., Physical Uplink Shared Channel (PUSCH)) transmitted in Message 3 is obtained according to, for example, following Equation 2 (see, e.g., NPL 3):

$$P_{PUSCH} = \min\{P_{CMAX}, P_{O\_PUSCH} + 10\log_{10}(2^{\mu} \cdot M_{RB}) + \alpha \cdot PL + \Delta_{TF} + f\} \qquad \dots \text{(Equation 2)}$$

Here, $P_{CMAX}$ indicates the maximum transmit power at which the terminal is capable of transmission, and $P_{O\_PUSCH}$ indicates an offset value (a parameter configured by the base station) for target received power value $P_{PRACH\_target}$ for the PRACH preamble, and is given by, for example, Equation 3. The character "$\mu$" indicates a parameter representing a subcarrier spacing (SCS) of the PUSCH used for transmission of Message 3. For example, $\mu = 0$ when the subcarrier spacing is 15 kHz, and $\mu = 1$ when the subcarrier spacing is 30 kHz (see, e.g., NPL 1). The character "PL" indicates the path loss level measured by the terminal, "$\alpha$" indicates a weight factor representing a compensation rate for the path loss (e.g., a parameter configured by the base station). The character "$\Delta_{TF}$" indicates a parameter given by a Modulation and Coding Scheme (MCS) or the like of the PUSCH. The character "f" is a value considering accumulated values including a TPC command in Closed-loop control and past power ramping.

$$P_{O\_PUSCH} = P_{PRACH\_target} + \Delta_{PREAMBLE\_Msg3} \qquad \dots \text{(Equation 3)}$$

The TPC command for the PUSCH transmitted in Message 3 is included, for example, in the RAR transmitted in Message 2.

In the 2-step Random access procedure, the terminal transmits, in Message A, a signal (e.g., PRACH preamble) corresponding to Message 1 and a signal (e.g., PUSCH) corresponding to Message 3 in the 4-step Random access procedure at similar timings (or at a simultaneous timing). Accordingly, in Message A, the terminal transmits Message A (e.g., PUSCH signal) without indication (e.g., the TPC command included in the RAR) from the base station.

For example, in the 2-step Random access procedure, application of Open-loop control to the TPC for each of the PRACH preamble and the PUSCH in Message A is expected. For example, the terminal calculates the transmit power for the PRACH preamble based on Equation 1 in the same manner as in the 4-step Random access procedure, for example. Meanwhile, with respect to the PUSCH, a possible method for the terminal is to delete the TPC command part (e.g., "f" in Equation 2) relevant to the Closed-loop control in Equation 2, or to configure the TPC command part to a prescribed offset value.

However, in such a method, the transmit power control on the PUSCH by the base station is not performed. Thus, the transmission quality of Message A (e.g., PUSCH) may be degraded.

In addition, in the 2-step Random access procedure, orthogonal or quasi-orthogonal resources are used for the PRACH preamble, for example. However, when orthogonal resources are also applied to the PUSCH correspondingly to the orthogonal resources for the PRACH preamble, more radio resources are to be reserved for the PUSCH, and resource utilization efficiency is thus degraded. Accordingly, for example, a method is expected in which one PUSCH resource is allocated correspondingly to orthogonal resources for a plurality of PRACH preambles. With these resources, collision of signals between terminals in the 2-step Random access procedure is more likely to occur in PUSCH resources than in PRACH preamble resources.

If a terminal for which the PUSCH transmission quality does not satisfy predetermined reliability transmits a PUSCH in Message A, a PUSCH collision is more likely to be caused. Thus, interference with other terminals in PUSCH resources is more likely to be increased. In such a case, it is desirable for the terminal to transmit the PRACH preamble in Message A without PUSCH transmission, i.e., to fall back from the 2-step Random access procedure to the 4-step Random access procedure.

However, the transmit power control considering Fallback operation in the 2-step Random access procedure has not comprehensively been studied.

Therefore, in an exemplary embodiment of the present disclosure, an uplink transmit power control method in the 2-step Random access procedure will be described.

Hereinafter, embodiments of the present invention will be described in detail.

(Embodiment 1)

[Overview of Communication System]

A communication system according to each embodiment of the present disclosure includes base station 100 and terminal 200.

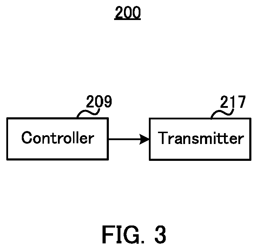

FIG. 3 is a block diagram illustrating a configuration example of a part of terminal 200 according to each embodiment of the present disclosure. In terminal 200 illustrated in FIG. 3, controller 209 (corresponding to the control circuitry) selects, based on channel quality, one of a first method for transmitting a random access signal (e.g., Message A) including a preamble part (e.g., PRACH preamble) and a data part (e.g., PUSCH) and a second method for transmitting a random access signal including a preamble part but not including a data part. Transmitter 217 transmits the random access signal based on the selected method.

[Configuration of Base Station]

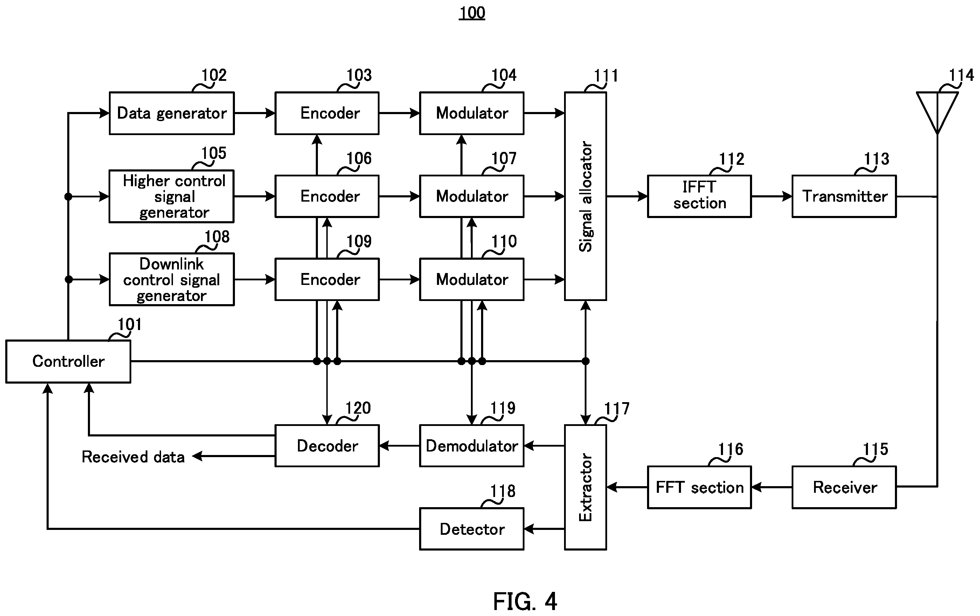

FIG. 4 is a block diagram illustrating a configuration example of base station 100 according to Embodiment 1 of the present disclosure. In FIG. 4, base station 100 includes controller 101, data generator 102, encoder 103, modulator 104, higher control signal generator 105, encoder 106, modulator 107, downlink control signal generator 108, encoder 109, modulator 110, signal allocator 111, Inverse Fast Fourier Transform (IFFT) section 112, transmitter 113, antenna 114, receiver 115, Fast Fourier Transform (FFT) section 116, extractor 117, detector 118, demodulator 119, and decoder 120.

Controller 101 determines information for transmission of Message A by terminal 200 (also referred to as "transmission parameter of Message A"), and outputs the determined information to extractor 117, demodulator 119, and decoder 120. Further, controller 101 outputs the determined information to higher control signal generator 105.

The information for transmission of Message A includes, for example, information on transmit power control on the PRACH preamble (e.g., the preamble part) and the PUSCH (e.g., the data part) of Message A. The information for transmission of Message A may also include information on PRACH preamble resources, PUSCH resources, a PUSCH Transport Block Size (TBS), or MCS of Message A. Further, for example, when terminal 200 transmits Message A including Uplink Control Information (UCI), the information for transmission of Message A may include information on the UCI transmission.

In addition, controller 101 determines radio resource allocation (e.g., downlink resources, MCS, and the like) for a downlink signal for transmitting a data signal (e.g., Message B or the like), a higher layer control signal (e.g., higher control signal), or downlink control information (e.g., downlink control signal). Controller 101 outputs the determined information to encoders 103, 106, and 109, modulators 104, 107, and 110, and signal allocator 111. Further, controller 101 outputs the determined information to downlink control signal generator 108.

In addition, based on a decoding result of Message A (e.g., C-Plane data or User Plane (UP) data) inputted from decoder 120 and a detection result of Message A (e.g., PRACH preamble) inputted from detector 118, controller 101 determines information to be included in Message B, and outputs the determined information to data generator 102.

Data generator 102 generates an information bit sequence (in other words, downlink data) of Message B using the information to be included in Message B inputted from controller 101, and outputs the generated information bit sequence to encoder 103.

Encoder 103 performs error coding on the information bit sequence (data signal) inputted from data generator 102, and outputs the encoded data signal to modulator 104.

Modulator 104 modulates the data signal inputted from encoder 103, and outputs the modulated data signal to signal allocator 111.

Higher control signal generator 105 generates a control information bit sequence (higher control signal) using the control information inputted from controller 101, and outputs the generated control information bit sequence (higher control signal) to encoder 106.

Encoder 106 performs error correction coding on the control information bit sequence inputted from higher control signal generator 105, and outputs the encoded control signal to modulator 107.

Modulator 107 modulates the control signal inputted from encoder 106, and outputs the modulated control signal to signal allocator 111.

Downlink control signal generator 108 generates a control information bit sequence (downlink control signal; for example, DCI) using the control information inputted from controller 101, and outputs the generated control information bit sequence to encoder 109. Accordingly, downlink control signal generator 108 may scramble the control information (e.g., Physical Downlink Control Channel (PDCCH)) for the terminals using identification information (e.g., Random Access-RNTI (RA-RNTI)) for all terminals, UE-specific identification information (e.g., C-RNTI), or the like.

Encoder 109 performs error correction coding on the control information bit sequence inputted from downlink control signal generator 108, and outputs the encoded control signal to modulator 110.

Modulator 110 modulates the control signal inputted from encoder 109, and outputs the modulated control signal to signal allocator 111.

Based on the information indicating the radio resources inputted from controller 101, signal allocator 111 maps, to the radio resources, the data signal inputted from modulator 104, the higher control signal inputted from modulator 107, or the downlink control signal inputted from modulator 110. Signal allocator 111 outputs, to IFFT section 112, the downlink signal to which the signal is mapped.

IFFT section 112 performs transmission waveform generation processing such as Orthogonal Frequency Division Multiplexing (OFDM) on the signal inputted from signal allocator 111. In the case of OFDM transmission with Cyclic Prefix (CP) addition, IFFT section 112 adds CP (not illustrated). IFFT section 112 outputs the generated transmission waveform to transmitter 113.

Transmitter 113 performs Radio Frequency (RF) processing such as Digital-to-Analog (D/A) conversion, up-conversion, and the like on the signal inputted from IFFT section 112, and transmits a radio signal to terminal 200 via antenna 114.

Receiver 115 performs RF processing such as down-conversion or Analog-to-Digital (A/D) conversion on an uplink signal waveform received via antenna 114 from terminal 200, and outputs the uplink signal waveform after the reception processing to FFT section 116.

FFT section 116 performs, on the uplink signal waveform inputted from receiver 115, FFT processing for converting a time-domain signal into a frequency-domain signal. FFT section 116 outputs the frequency-domain signal obtained by the FFT processing to extractor 117.

Based on the information inputted from controller 101, extractor 117 extracts, from the signal inputted from FFT section 116, a radio resource portion by which the PRACH preamble is transmitted, a radio resource portion by which UCI is transmitted, or a radio resource portion by which a PUSCH of Message A is transmitted. Extractor 117 outputs, to detector 118, the extracted radio resource portion by which the PRACH preamble is transmitted, and outputs, to demodulator 119, the extracted radio resource portion by which the UCI is transmitted, or the extracted radio resource portion by which the PUSCH of Message A is transmitted.

Detector 118 performs PRACH preamble detection on the radio resource portion inputted from extractor 117 that corresponds to the PRACH preamble. Detector 118 outputs information on the detection result of detection of the PRACH preamble to controller 101.

Based on the information inputted from controller 101, demodulator 119 demodulates the radio resource portion corresponding to the UCI or the radio resource portion corresponding to the data of Message A that are inputted from extractor 117, and outputs a demodulation result (demodulation sequence) to decoder 120.

Based on the information inputted from controller 101, decoder 120 performs error correction decoding on the demodulation result inputted from demodulator 119, and outputs the decoded bit sequence (including, for example, UCI, C-Plane data, or UP data). For example, decoder 120 outputs the obtained UCI to controller 101.

[Configuration of Terminal]

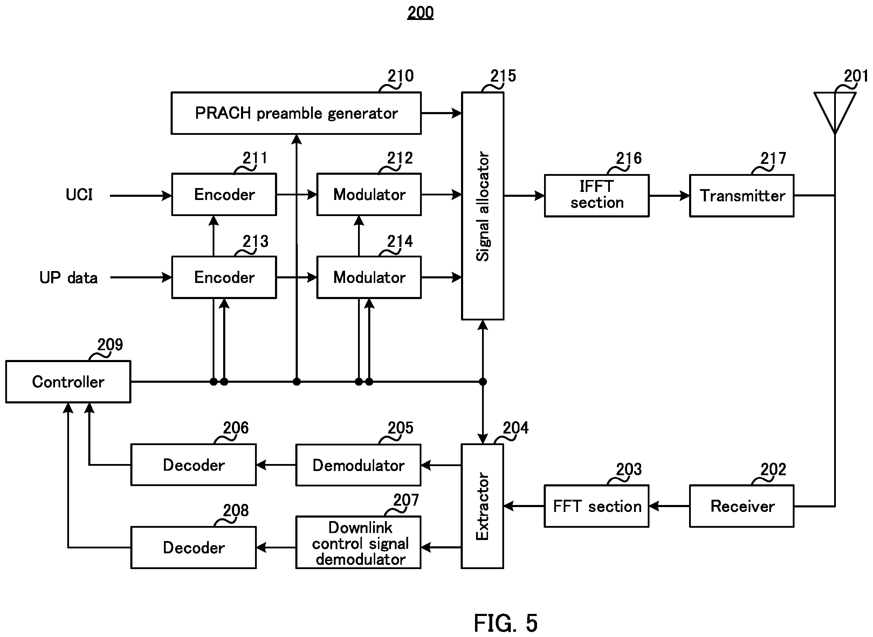

FIG. 5 is a block diagram illustrating a configuration example of terminal 200 according to the embodiment of the present disclosure. In FIG. 5, terminal 200 includes antenna 201, receiver 202, FFT section 203, extractor 204, demodulator 205, decoder 206, downlink control signal demodulator 207, decoder 208, controller 209, PRACH preamble generator 210, encoder 211, modulator 212, encoder 213, modulator 214, signal allocator 215, IFFT section 216, and transmitter 217.

Receiver 202 performs RF processing such as down-conversion, Analog-to-Digital (A/D) conversion, or the like on the signal waveform of the downlink signal from base station 100 received via antenna 201, and outputs the received signal obtained (baseband signal) to FFT section 203. The downlink signal includes, for example, a data signal (e.g., Message B or the like), a higher control signal, or a downlink control signal.

FFT section 203 performs, on the signal (time-domain signal) inputted from receiver 202, FFT processing for converting the time-domain signal into a frequency-domain signal. FFT section 203 outputs the frequency domain signal obtained by the FFT processing to extractor 204.

Based on the control information inputted from controller 209 (e.g., information on radio resources for the control signal), extractor 204 extracts the data signal (e.g., Message B or the like), the downlink control signal, or the higher control signal from the signal inputted from FFT section 203. Extractor 204 outputs the data signal or the higher control signal to demodulator 205, and outputs the downlink control signal to downlink control signal demodulator 207.

Demodulator 205 demodulates the data signal or the higher control signal inputted from extractor 204, and outputs the demodulation result to decoder 206.

Decoder 206 performs error correction decoding using the demodulation result inputted from demodulator 205 to obtain received data (e.g., Message B) or control information. Decoder 208 outputs the obtained received data or control information to controller 209.

Downlink control signal demodulator 207 demodulates the downlink control signal inputted from extractor 204, and outputs the demodulation result to decoder 208.

Decoder 208 performs error correction decoding using the demodulation result inputted from downlink control signal demodulator 207 to obtain the control information. Decoder 208 outputs the control information obtained to controller 209.

Controller 209 determines a method or parameter relevant to transmit power control for uplink transmission (e.g., transmission of Message A) based on the control information inputted from decoder 206 or decoder 208. For example, controller 209 determines (or selects) a Random access procedure to be applied (e.g., the 2-step Random access procedure or the 4-step Random access procedure). Further, controller 209 determines the transmission parameter of Message A using the information on transmission of Message A by terminal 200 obtained from the higher control signal inputted from decoder 206. Controller 209 outputs the determined information to PRACH preamble generator 210, encoders 211 and 213, modulators 212 and 214, and signal allocator 215.

Controller 209 also outputs, to extractor 204, the information on the radio resources for the control signal that is included in the control information inputted from decoder 206 or decoder 208.

PRACH preamble generator 210 generates the PRACH preamble based on the control information (e.g., transmission parameter of Message A) inputted from controller 209, and outputs the generated PRACH preamble to signal allocator 215.

When transmitting the UCI to base station 100, encoder 211 performs error correction coding on the UCI (e.g., UCI sequence) based on the information inputted from controller 209, and outputs the encoded UCI (bit sequence) to modulator 212.

Based on the information inputted from controller 209, modulator 212 modulates the UCI inputted from encoder 211, and outputs the modulated UCI (modulation symbol sequence) to signal allocator 215.

Based on the control information (e.g., transmission parameter of Message A) inputted from controller 209, encoder 213 performs error correction coding on, for example, an information bit sequence (e.g., C-Plane data and UP data) to be transmitted in the data part of Message A, and outputs the encoded bit sequence to modulator 214.

Based on the information inputted from controller 209, modulator 214 modulates the bit sequence inputted from encoder 213, and outputs a data signal (modulation symbol sequence) to signal allocator 215.

Signal allocator 215 maps, to radio resources indicated by controller 209, the signal inputted from PRACH preamble generator 210, the signal inputted from modulator 212, or the signal inputted from modulator 214, and outputs, to IFFT section 216, the uplink signal in which the signal is mapped.

IFFT section 216 performs transmission waveform generation processing such as OFDM on the signal inputted from signal allocator 215. In the case of OFDM transmission with CP addition, IFFT section 216 adds CP (not illustrated). Alternatively, when IFFT section 216 generates a single-carrier waveform, a Discrete Fourier Transform (DFT) section (not illustrated) may be added on the upstream side of signal allocator 215. IFFT section 216 outputs the generated transmission waveform to transmitter 217.

Transmitter 217 performs the RF processing such as D/A conversion, up-conversion, and/or the like on the signal inputted from IFFT section 216, and transmits a radio signal to base station 100 via antenna 201.

[Operation Example of Base Station 100 and Terminal 200]

An operation example of base station 100 and terminal 200 having the above configurations will be described.

In the present embodiment, at the time of transmission of an uplink signal (e.g., Message A) in the 2-step Random access procedure, terminal 200 selects, for example, one of the 2-step Random access procedure (e.g., transmission of a signal including a PRACH preamble and a PUSCH) and the 4-step Random access procedure (e.g., transmission of a signal including the PRACH preamble but not including the PUSCH). In other words, terminal 200 determines whether to apply the 2-step Random access procedure or to apply Fallback to the 4-step Random access procedure.

For example, terminal 200 calculates the transmit power for the PRACH preamble and the transmit power for the PUSCH in Message A. When both the calculated transmit power value of the PRACH preamble and the calculated transmit power value of the PUSCH satisfy permissible values (in other words, when the transmit power values are equal to or greater than thresholds), terminal 200 transmits the PRACH preamble and the PUSCH at the time of transmission of Message A (in other words, selects the 2-step Random access procedure). On the other hand, when at least one of the calculated transmit power value of the PRACH preamble and the calculated transmit power value of the PUSCH does not satisfy the corresponding permissible value (in other words, when the transmit power value is less than the corresponding threshold), terminal 200 transmits the PRACH preamble without transmitting the PUSCH at the time of transmission of Message A (in other words, selects Fallback to the 4-step Random access procedure). Note that, the permissible values (e.g., thresholds) of the transmit power values are transmit powers for base station 100 to receive signals of the PRACH preamble and the PUSCH with sufficient reliability, for example.

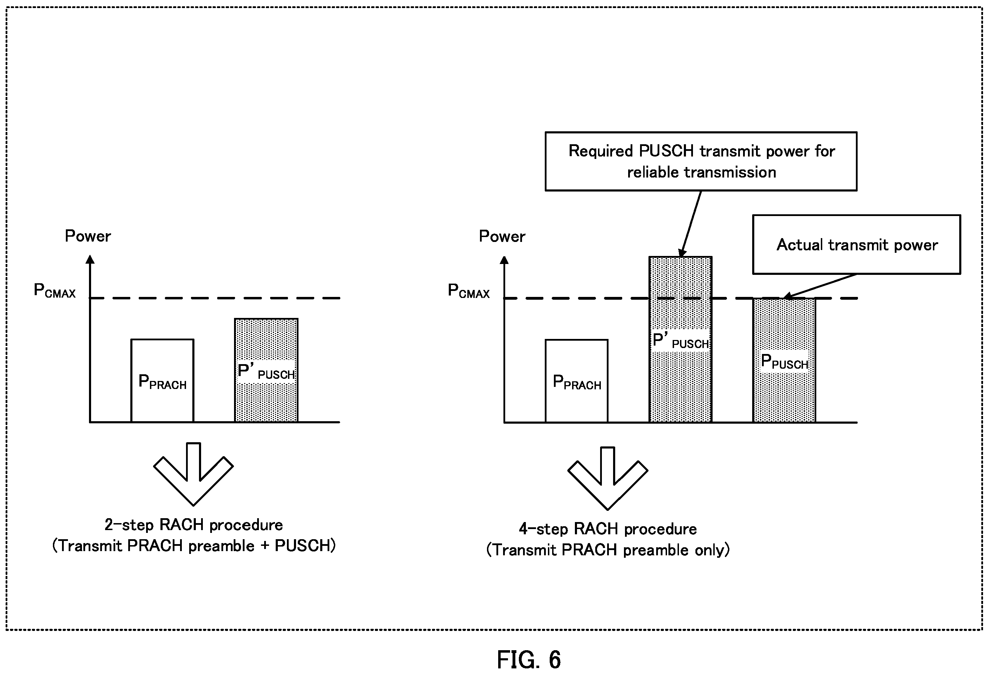

FIG. 6 illustrates an exemplary Random access procedure according to the present embodiment.

Terminal 200 first calculates transmit power $P_{PRACH}$ for the PRACH preamble and transmit power $P_{PUSCH}$ for the PUSCH (which may also be expressed as "$P'_{PUSCH}$") in Message A. Examples of the calculation method for calculating the transmit powers include a method based on Open-loop control described above. For example, terminal 200 calculates transmit power $P_{PRACH}$ for the PRACH preamble and transmit power $P_{PUSCH}$ for the PUSCH as follows:

$$P_{PRACH} = \min\{P_{CMAX},\ P_{PRACH\_target} + PL\} \qquad \text{... (Equation 4)}$$

$$P_{PUSCH} = \min\{P_{CMAX},\ P_{O\_PUSCH} + 10\log_{10}(2^{\mu} \cdot M_{RB}) + \alpha \cdot PL + \Delta_{TF}\} \qquad \text{... (Equation 5)}$$

Here, by way of example, a description will be given of a case where transmit power values prior to scaling by maximum transmit powers $P_{CMAX}$ at which terminal 200 is capable of transmission (e.g., values corresponding to the second terms of minimum functions in Equations 4 and 5) are configured as the permissible values. For example, when the transmit power value of a signal is equal to or greater than the permissible value (in other words, the threshold), the signal is received with sufficient reliability at base station 100. On the other hand, for example, when the transmit power value of a signal is less than the permissible value (in other words, the threshold), the signal is not received with sufficient reliability at base station 100. Note that, the values configured as the permissible values are not limited to these values, and may be other values.

For example, in FIG. 6, terminal 200 is capable of transmitting the PRACH preamble and the PUSCH at the transmit power values that are the permissible values (thresholds), when each of transmit power $P_{PRACH}$ for the PRACH preamble and transmit power $P'_{PUSCH}$ for the PUSCH is equal to or less than $P_{CMAX}$. Accordingly, terminal 200 determines that base station 100 is capable of receiving both signals of the PRACH preamble and the PUSCH with sufficient reliability, and determines that the transmit powers for Message A satisfy the permissible values. In this case, terminal 200 performs the 2-step Random access procedure. In other words, terminal 200 transmits the PRACH preamble and the PUSCH in Message A.

On the other hand, for example, in FIG. 6, when the transmit power value prior to scaling by $P_{CMAX}$ ($P'_{PUSCH}$ in FIG. 6) exceeds $P_{CMAX}$, terminal 200 scales the transmit power ($P_{PUSCH}$ in FIG. 6) down to $P_{CMAX}$. Because of the scaling, terminal 200 is incapable of transmitting the PUSCH at transmit power value $P'_{PUSCH}$ that is the permissible value (threshold), when $P'_{PUSCH}$ exceeds $P_{CMAX}$. Thus, terminal 200 determines that one of the transmit powers for the PRACH preamble and the PUSCH does not satisfy the corresponding permissible value. In this case, terminal 200 performs the 4-step Random access procedure. In other words, terminal 200 transmits the PRACH preamble in Message A without transmitting the PUSCH.

As is understood, according to the present embodiment, terminal 200 selects the 2-step Random access procedure (in other words, transmission of the PRACH preamble and the PUSCH) or the 4-step Random access procedure (in other words, transmission of the PRACH preamble and non-transmission of PUSCH) depending on the channel state between base station 100 and terminal 200. For example, when the channel state is poor and the transmission quality does not satisfy predetermined reliability, terminal 200 selects the 4-step Random access procedure and does not transmit a PUSCH. It is thus possible to reduce PUSCH collision with other terminals.

Note that, in the present embodiment, the calculation method of calculating the transmit powers may be the Open-loop control method based on the transmit power control in the 4-step Random access procedure described above, or may be another method. For example, terminal 200 may calculate the transmit power for the PRACH preamble in accordance with Equation 4, and may configure, as the transmit power for the PUSCH, a value obtained by adding an offset value (e.g., a parameter configured by the base station) to the calculated transmit power for the PRACH preamble.

[Transmission Timing of Uplink Signal]

Next, the present embodiment will be described in relation to a timing at which terminal 200 transmits an uplink signal (e.g., Message A). Below-described timings 1 to 3 are expected as the transmission timing of the uplink signal, for example.

<Timing 1>

Timing 1 is a timing at which terminal 200 performs initial transmission of Message A.
Terminal 200 transmits Message A to trigger a 2-step Random access procedure. Message A includes, for example, a PRACH preamble and a PUSCH.
However, at timing 1, when either one of the transmit power value of the PRACH preamble and the transmit power value of the PUSCH in Message A does not satisfy the corresponding permissible value, terminal 200 transmits the PRACH preamble without transmitting the PUSCH at the time of transmission of Message A (in other words, performs Fallback to the 4-step Random access procedure).

<Timing 2>

Timing 2 is a timing at which terminal 200 receives Message B.
When detecting and correctly decoding Message A, base station 100 transmits Message B. Message B includes, for example, a RACH response (RAR) and identification information on terminal 200 (e.g., UE-ID). When terminal 200 successfully decodes Message B including the corresponding UE-ID of terminal 200, terminal 200 determines that the Random access procedure is successful.
Base station 100 transmits Message B also when detecting the PRACH preamble of Message A but failing to decode a data part. In this case, at this time point, base station 100 is incapable of identifying terminal 200 having transmitted the PRACH preamble. Thus, Message B includes, for example, the RACH response (RAR). The RAR may include, for example, information requesting terminal 200 having transmitted the PRACH preamble to retransmit Message A (in other words, information on retransmission of Message A). Following Option 1 and Option 2 are assumed for the information on retransmission of Message A included in the RAR.

<Option 1>

In Option 1, the RAR includes indication (e.g., negative acknowledgement (NACK)) requesting retransmission from terminal 200 having transmitted the PRACH preamble detected by base station 100. However, the RAR does not include information on resources for retransmission of Message A. When receiving Message B including the indication requesting retransmission of the PRACH preamble transmitted by terminal 200, terminal 200 transmits Message A again (in other words, retransmits Message A). Message A to be retransmitted includes, for example, the PRACH preamble and the PUSCH.

However, at timing 2, when at least one of the transmit power value of the PRACH preamble and the transmit power value of the PUSCH in Message A to be retransmitted does not satisfy the corresponding permissible value, terminal 200 transmits the PRACH preamble without transmitting the PUSCH at the time of transmission of Message A (in other words, performs Fallback to the 4-step Random access procedure).

<Option 2>

In Option 2, the RAR includes information on PUSCH resources in the indication requesting retransmission from terminal 200 having transmitted the PRACH preamble detected by base station 100. When receiving Message B including the indication requesting retransmission of the PRACH preamble transmitted by terminal 200 and relating to the PUSCH resources, terminal 200 retransmits Message A. At this time, terminal 200 transmits the PUSCH without transmitting the PRACH preamble in the retransmission of Message A. In other words, Message A does not include the PRACH preamble, but includes the PUSCH.

However, at timing 2, when the transmit power value of the PUSCH to be retransmitted does not satisfy the permissible value, terminal 200 switches to transmission of the PRACH preamble without transmitting the PUSCH at the time of transmission of Message A (in other words, performs Fallback to the 4-step Random access procedure).

<Timing 3>

Timing 3 is a timing at which terminal 200 retransmits Message A when terminal 200 does not receive Message B within a specified period (e.g., Msg. B reception window or the like) after transmission of Message A.

When base station 100 fails to detect Message A (e.g., PRACH preamble), base station 100 does not include, in Message B, information addressed to terminal 200 having transmitted Message A. When terminal 200 having transmitted Message A does not receive Message B including the information addressed to terminal 200 within the specified period (e.g., Msg. B reception window) after transmission of Message A, terminal 200 retransmits Message A. Message A to be retransmitted includes, for example, the PRACH preamble and the PUSCH.

However, at timing 3, when at least one of the transmit power value of the PRACH preamble and the transmit power value of the PUSCH in Message A to be retransmitted does not satisfy the corresponding permissible value, terminal 200 transmits the PRACH preamble without transmitting the PUSCH at the time of transmission of Message A (in other words, performs Fallback to the 4-step Random access procedure).

The transmission timings of the uplink signal (e.g., timings 1 to 3) have been described above.

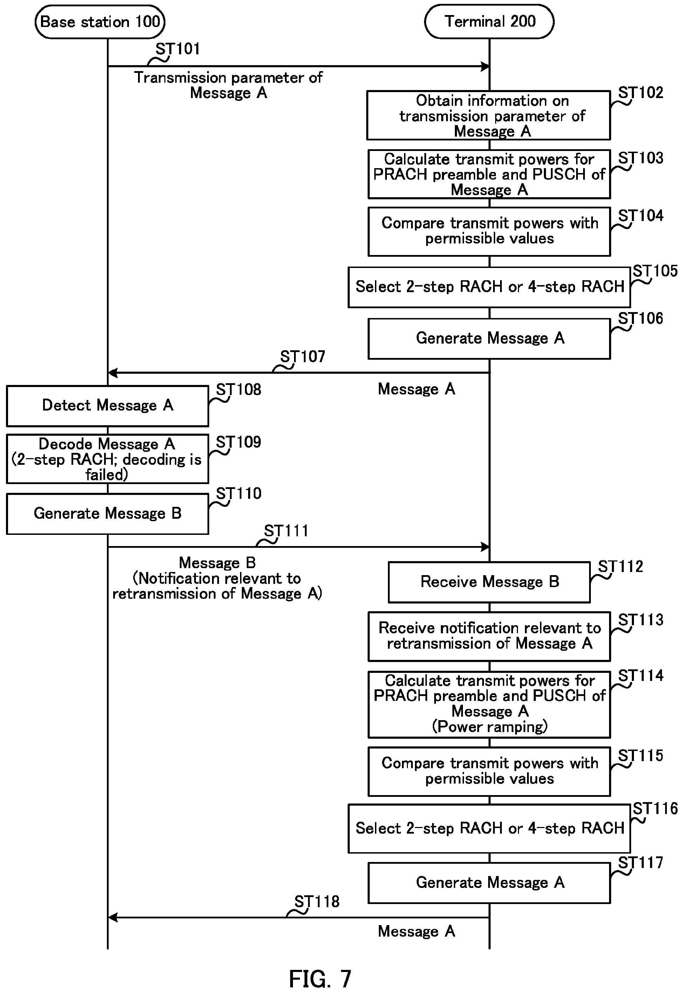

Next, by way of example, FIG. 7 illustrates a flow of a processing example in base station 100 and terminal 200 according to the present embodiment. FIG. 7 illustrates a processing example of processes at timing 1 (at the time of initial transmission) and timing 2 (at the time of retransmission) among the transmission timings of the uplink signal described above.

In FIG. 7, base station 100 transmits a transmission parameter of Message A to terminal 200 (ST101). Examples of the transmission parameter of Message A may include parameters relevant to the transmit power control on the PRACH preamble and the PUSCH of Message A.

Terminal 200 obtains information on the transmission parameter of Message A indicated by base station 100 (ST102). Terminal 200 calculates the transmit power for the PRACH preamble and the transmit power for the PUSCH of Message A based on, for example, the transmission parameter of Message A (ST103).

Terminal 200 compares the calculated transmit powers with the permissible values (ST104), and selects one of the 2-step Random access procedure and the 4-step Random access procedure based on the comparison result (ST105). For example, when at least one of the transmit power for the PRACH preamble and the transmit power for the PUSCH does not satisfy the corresponding permissible value (in other words, when the at least one transmit power is less than the threshold), terminal 200 selects the 4-step Random access procedure. On the other hand, when both the transmit power for the PRACH preamble and the transmit power for the PUSCH satisfy the permissible values (in other words, when both the transmit powers are equal to or greater than the thresholds), terminal 200 selects the 2-step Random access procedure.

Terminal 200 generates Message A based on the selected Random access procedure (ST106). For example, when having selected the 2-step Random access procedure, terminal 200 generates Message A including the PRACH preamble and the PUSCH. On the other hand, when having selected the 4-step Random access procedure, terminal 200 generates Message A not including the PUSCH but including the PRACH preamble, for example.

Terminal 200 transmits generated Message A to base station 100 (ST107).

Base station 100 detects Message A (e.g., PRACH preamble) transmitted by terminal 200 (ST108). In addition, when detected Message A is Message A of the 2-step Random access procedure, base station 100 decodes the PUSCH included in Message A (ST109).

Base station 100 generates Message B (ST110). Here, in FIG. 7, it is assumed that base station 100 detects the PRACH preamble but fails to decode the PUSCH. In this case, base station 100 generates Message B including indication relevant to retransmission of Message A (e.g., retransmission request). Base station 100 transmits Message B to terminal 200 (ST111).

Terminal 200 receives Message B from base station 100 (ST112) and receives the indication relevant to retransmission of Message A included in Message B (ST113). Accordingly, terminal 200 determines the retransmission of Message A (in other words, the retransmission at timing 2 described above).

For example, in Option 1 at timing 2 described above, terminal 200 includes the PRACH preamble and the PUSCH in Message A to be retransmitted.

However, similarly to the processes at timing 1 (for example, the processes from ST102 to ST106), terminal 200 determines, based on the transmit powers for Message A, the Random access procedure to be applied to retransmitted Message A.

For example, terminal 200 calculates the transmit power for the PRACH preamble and the transmit power for the PUSCH of Message A (ST114), and compares the calculated transmit powers with the permissible values (ST115). At this time, for example, terminal 200 may increase (power ramping) the transmit power for at least one of the PRACH preamble and the PUSCH to a transmit power greater than that at the initial transmission (e.g., timing 1) (see, e.g., Embodiment 2 or 4 described later).

As in ST105, terminal 200 selects either one of the 2-step Random access procedure and 4-step Random access procedure based on the comparison result (ST116). Based on the selected Random access procedure, terminal 200 generates Message A to be retransmitted (ST117) and transmits (in other words, retransmits) Message A to base station 100 (ST118).

Note that, in FIG. 7, Option 1 at timing 2 (the case where the PRACH preamble and the PUSCH are included in retransmitted Message A) has been described, but Option 2 at timing 2 (the case where the PUSCH is included in retransmitted Message A but the PRACH preamble is not) may be applied.

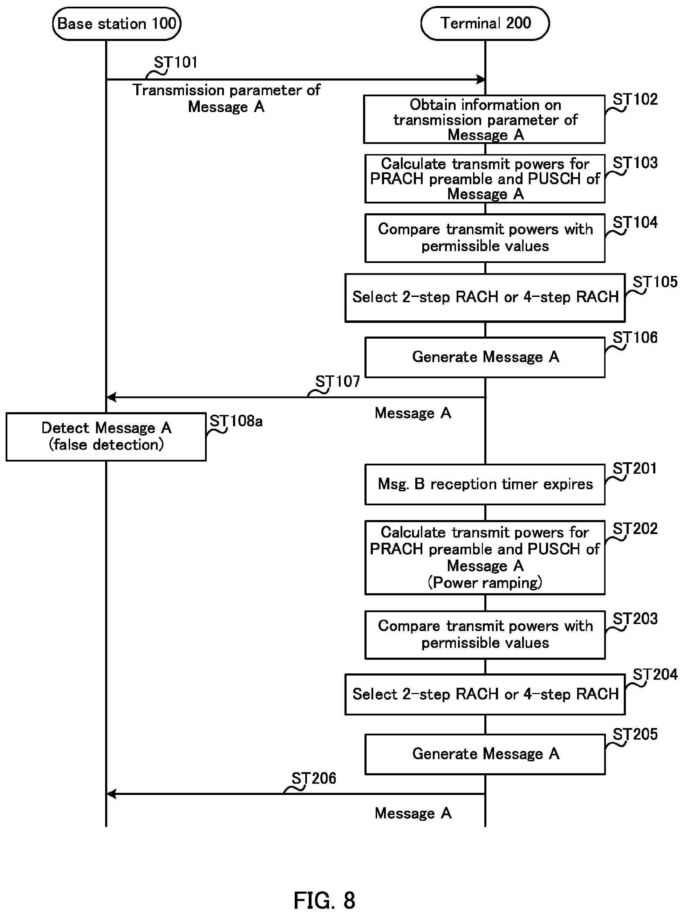

Next, by way of another example, FIG. 8 illustrates a flow of a processing example in base station 100 and terminal 200 according to the present embodiment. FIG. 8 illustrates a processing example of processes at timing 1 (at the time of initial transmission) and timing 3 (at the time of retransmission) among the transmission timings of the uplink signal described above.

In FIG. 8, the same processes as those in FIG. 7 (e.g., processes at timing 1 (e.g., processes from ST101 to ST107)) are provided with the same reference numerals, and descriptions thereof are omitted.

In FIG. 8, by way of example, it is assumed that base station 100 fails to detect Message A (e.g., including the PRACH preamble) from terminal 200 (ST108a). In this case, base station 100 does not include, in Message B (not illustrated), information addressed to terminal 200 having transmitted Message A. In other words, terminal 200 cannot receive Message B from base station 100.

After transmitting Message A (ST106), terminal 200 determines whether or not Message B has been received within a specified period (e.g., Msg. B reception window) (in other words, whether or not an Msg. B reception timer has expired) (ST201). When the Msg. B reception timer has expired, terminal 200 determines retransmission of Message A (in other words, the retransmission at timing 3 described above).

For example, terminal 200 includes the PRACH preamble and the PUSCH in Message A to be retransmitted.

However, similarly to the processes at timing 1 (for example, the processes from ST102 to ST106), terminal 200 determines, based on the transmit powers for Message A, the Random access procedure to be applied to retransmitted Message A.

For example, terminal 200 calculates the transmit power for the PRACH preamble and the transmit power for the PUSCH of Message A (ST202), and compares the calculated transmit powers with the permissible values (ST203). At this time, for example, terminal 200 may increase (power ramping) the transmit power for at least one of the PRACH preamble and the PUSCH to a transmit power greater than that at the initial transmission (e.g., timing 1) (see, e.g., Embodiment 2 or 4 described later).

As in ST105, terminal 200 selects either one of the 2-step Random access procedure and 4-step Random access procedure based on the comparison result (ST204). Based on the selected Random access procedure, terminal 200 generates Message A (ST205) and transmits (in other words, retransmits) Message A to base station 100 (ST206).

As described above, in the present embodiment, when at least one of the transmit power for the PRACH preamble and the transmit power for the PUSCH of Message A does not satisfy the corresponding permissible value when the 2-step Random access procedure is performed, terminal 200 transmits the PRACH preamble without transmitting the PUSCH at the time of transmission of Message A. In other words, terminal 200 falls back from the 2-step Random access procedure to the 4-step Random access procedure when the quality of Message A (e.g., transmit power) does not satisfy the permissible value.

Thus, for example, when the PUSCH transmission quality cannot satisfy predetermined reliability, terminal 200 can avoid transmission of the PUSCH at the time of transmission of Message A of the 2-step Random access procedure, so as to reduce an increase in interference with other terminals in the PUSCH resources.

Accordingly, according to the present embodiment, it is possible to improve the efficiency of the random access processing.

Note that, Embodiment 1 has been described in which terminal 200 calculates the transmit power for the PRACH preamble and the transmit power for the PUSCH, and compares the transmit powers with the permissible values. However, the present invention is not limited to this, and for example, terminal 200 may calculate the transmit power for the PUSCH without calculating the transmit power for the PRACH preamble, and may compare the calculated transmit power with the corresponding permissible value. In other words, terminal 200 may select one of the 2-step Random access procedure and the 4-step Random access procedure based on the transmit power for the PUSCH.

(Variation 1 of Embodiment 1)

Values used as references for terminal 200 to select one of the 2-step Random access procedure (in other words, transmission of the PRACH preamble and the PUSCH) and the 4-step Random access procedure (in other words, transmission of the PRACH preamble and non-transmission of the PUSCH) are not limited to the transmit power values, but may be other information on the channel quality between base station 100 and terminal 200. For example, the values used as references for selection of the Random access procedure may be at least one received quality of a downlink signal (e.g., path loss, received Signal to Noise Ratio (SNR), or received Signal to Interference and Noise Ratio (SINR)). Since the calculation method of calculating the transmit power in NR is intended to compensate for a path loss, terminal 200 can select one of the 2-step Random access procedure and the 4-step Random access procedure in accordance with the channel state. It is thus possible to reduce unnecessary PUSCH transmission by terminal 200 for which the transmission quality cannot satisfy predetermined reliability due to a poor channel state, so as to reduce unnecessary collision between PUSCHs.

Further, a synchronization signal in NR is composed of, for example, two signals of Primary Synchronization Signal (PSS) and Secondary Synchronization Signal (SSS) (see, e.g., NPL 1). For example, in a high frequency band of 6 GHz or higher, it is expected that application of transmission beamforming at base station 100 ensures a communicable distance and area between base station 100 and terminal 200. In NR, the synchronization signal and a broadcast channel (e.g., Physical Broadcast Channel (PBCH)) are defined as one unit (e.g., referred to as "SS/PBCH block"). One SS/PBCH block is, for example, transmitted by transmission beams in the same direction, and a configuration (beam sweeping) in which beams are successively switched and transmitted is supported. However, for a lower frequency band or the like that is lower than the aforementioned high frequency band, a configuration in which a single SS/PBCH block is transmitted with a single beam pattern without applying beam sweeping may also be employed.

When beamforming is applied to the SS/PBCH block, base station 100 applies reception beamforming equivalent to that applied to the SS/PBCH block to receive a RACH from terminal 200 having received the SS/PBCH block, for example. For example, terminal 200 transmits a PRACH signal based on a PRACH preamble resource associated with the detected SS/PBCH block (e.g., see NPL 6). Further, for example, measurement using a channel-state estimation reference signal (Channel State Information Reference Signal (CSI-RS)) may be configured for terminal 200, and the CSI-RS and the PRACH preamble resource may be associated with each other (see, e.g., NPL 6).

For example, in the 4-step Random access procedure, terminal 200 measures the received quality (e.g., SS Reference Signal Received Power (SS-RSRP) or CSI-RSRP) of the SS/PBCH block or CSI-RS. Then, when there are more than one SS/PBCH blocks or CSI-RSs for which the SS-RSRP or CSI-RSRP is equal to or greater than a threshold, terminal 200 may select one SS/PBCH block or CSI-RS from among the SS/PBCH blocks or CSI-RSs and selects the PRACH preamble from a PRACH preamble resource candidate set associated with the selected SS/PBCH block or CSI-RS. Note that terminal 200 may, for example, select any one SS-RSRP or CSI-RSRP when there is no SS/PBCH block or CSI-RS for which the SS-RSRP or CSI-RSRP is equal to or greater than the threshold.

In addition, for example, in the 2-step Random access procedure, terminal 200 may measure the received quality of the SS/PBCH block or CSI-RS (e.g., SS-RSRP or CSI-RSRP), and, when there are more than one SS/PBCH blocks or CSI-RSs for which the SS-RSRP or CSI-RSRP is equal to or greater than the threshold, terminal 200 may select one SS/PBCH block or CSI-RS from among the SS/PBCH blocks or CSI-RSs and perform the 2-step Random access procedure. That is, terminal 200 may transmit Message A including a PRACH preamble and a PUSCH using PRACH preamble resources associated with one of a plurality of SS/PBCH blocks or CSI-RSs for which the received quality is equal to or higher than the threshold.

On the other hand, when there is no SS/PBCH block or CSI-RS for which the received quality (e.g., SS-RSRP or CSI-RSRP) is equal to or higher than the threshold, terminal 200 may, for example, select any one SS/PBCH block or CSI-RS and fall back to the 4-step Random access procedure. That is, when there is no signal among a plurality of SS/PBCH blocks or CSI-RSs for which the received quality is equal to or higher than the threshold, terminal 200 may transmit Message A including the PRACH preamble but not including any PUSCH using PRACH preamble resources associated with any one of a plurality of SS/PBCH blocks or CSI-RSs.

According to Variation 1, it is possible to select a beam pattern of higher quality for the 2-step Random access procedure. It is thus possible to reduce unnecessary collision between PUSCHs by terminal 200 for which the transmission quality cannot satisfy predetermined reliability due to degraded PUSCH transmission quality and a poor channel state.

(Variation 2 of Embodiment 1)

In Variation 1, the threshold for SS-RSRP or CSI-RSRP may be different between the 4-step Random access procedure and the 2-step Random access procedure.

For example, for the 2-step Random access procedure, the threshold for SS-RSRP or CSI-RSRP may be set higher than for the 4-step Random access procedure. In this instance, a beam pattern of higher quality is selected for the 2-step Random access procedure. It is thus possible to reduce unnecessary collision between PUSCHs by terminal 200 for which the transmission quality cannot satisfy predetermined reliability due to degraded PUSCH transmission quality and a poor channel state.

(Variation 3 of Embodiment 1)

The Transport Block Size (TBS) for transmission of a PUSCH of Message A need not be fixed. For example, terminal 200 may select one TBS from a plurality of TBSs based on UP data (e.g., User plane data amount) actually transmitted by terminal 200.

In this case, terminal 200 may calculate the transmit power for the PUSCH in Message A based on the selected TBS, for example, and scale the TBS (in other words, select a smaller TBS) of the PUSCH when the calculated transmit power value does not satisfy the permissible value (in other words, when the calculated transmit power value is less than the threshold). Then, terminal 200 may calculate the transmit power for the PUSCH for which the TBS is scaled, and may transmit a PRACH preamble and the PUSCH using the scaled TBS in Message A when the calculated transmit power satisfies the permissible value. This method makes it possible for terminal 200 to transmit a reliable PUSCH as long as it is possible, so as to reduce a delay caused by fallback to the 4-step Random access procedure. Note that, when the TBS cannot be scaled (no smaller TBS can be selected), terminal 200 may transmit the PRACH preamble without transmitting the PUSCH at the time of transmission of Message A (in other words, fall back to the 4-step Random access procedure).

(Embodiment 2)

Since a base station and a terminal according to the present embodiment have the same basic configurations as base station 100 and terminal 200 according to Embodiment 1, they will be described with reference to FIGS. 4 and 5.

In the present embodiment, at the timing of retransmission of an uplink signal (e.g., Message A) in the 2-step Random access procedure, terminal 200 ramps up the transmit power for a PUSCH (in other words, increases the transmit power from the transmit power at the time of previous transmission) without changing the transmit power for a PRACH preamble of Message A from the transmit power at the time of previous transmission.

Further, when both the transmit power value of the PRACH preamble and the ramped-up transmit power value of the PUSCH satisfy the permissible values (e.g., the transmit powers for base station 100 to receive signals of the PRACH preamble and the PUSCH with sufficient reliability), terminal 200 transmits the PRACH preamble and the PUSCH at the time of retransmission of Message A (in other words, selects the 2-step Random access procedure). On the other hand, when at least one of the transmit power value of the PRACH preamble and the ramped-up transmit power value of the PUSCH does not satisfy the corresponding permissible value, terminal 200 transmits the PRACH preamble without transmitting the PUSCH at the time of retransmission of Message A (in other words, selects Fallback to the 4-step Random access procedure).

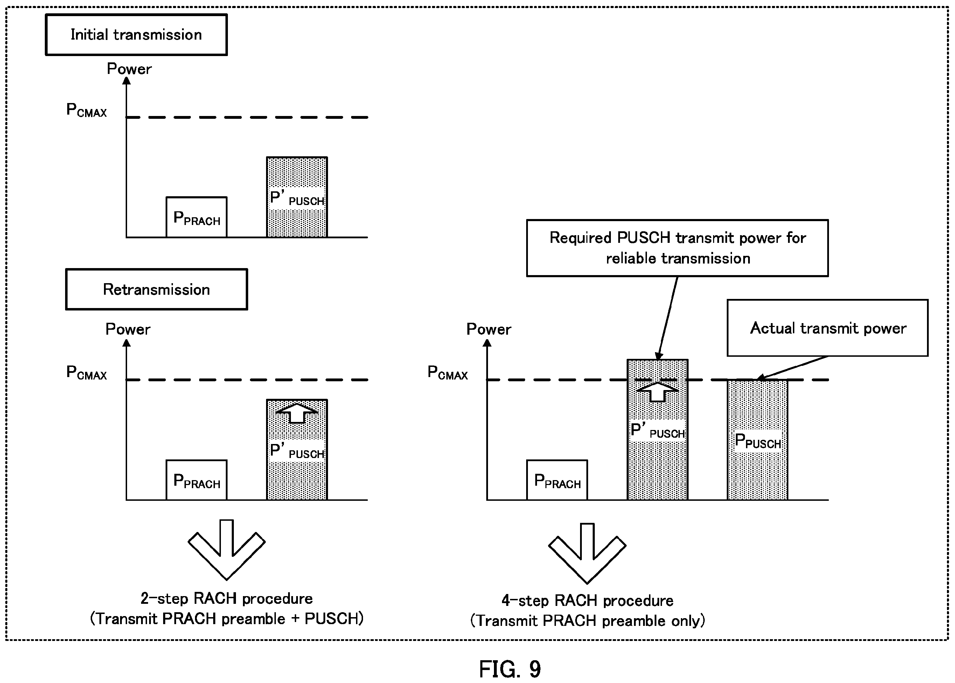

FIG. 9 illustrates an exemplary Random access procedure according to the present embodiment.

As illustrated in FIG. 9, when Message A is retransmitted, terminal 200 ramps up the transmit power for the PUSCH in Message A.

Then, terminal 200 calculates the transmit power for the PRACH preamble and the ramped-up transmit power for the PUSCH in Message A. For example, terminal 200 may configure, as the ramped-up transmit power, a value obtained by adding an offset value (e.g., a parameter configured by base station 100) to the transmit power for the PUSCH calculated prior to ramping.

Here, by way of example, a description will be given of a case where transmit power values prior to scaling by maximum transmit powers $P_{CMAX}$ at which terminal 200 is capable of transmission (e.g., values corresponding to the second terms of minimum functions in Equations 4 and 5) are configured as the permissible values (in other words, thresholds). Note that, the values configured as the permissible values are not limited to these values, and may be other values.

For example, in FIG. 9, terminal 200 is capable of transmitting the PRACH preamble and the PUSCH at the transmit power values that are the permissible values (thresholds), when each of transmit power $P_{PRACH}$ for the PRACH preamble and ramped-up transmit power $P'_{PUSCH}$ for the PUSCH is equal to or less than $P_{CMAX}$. Accordingly, terminal 200 determines that base station 100 is capable of receiving both signals of the PRACH preamble and the PUSCH with sufficient reliability, and determines that the transmit powers for Message A satisfy the permissible values. In this case, terminal 200 performs the 2-step Random access procedure. In other words, terminal 200 transmits the PRACH preamble and the PUSCH in Message A.

On the other hand, for example, in FIG. 9, when the transmit power value prior to scaling by $P_{CMAX}$ ($P'_{PUSCH}$ in FIG. 9) exceeds $P_{CMAX}$, terminal 200 scales the transmit power ($P_{PUSCH}$ in FIG. 9) down to $P_{CMAX}$. In addition, because of the scaling, terminal 200 is incapable of transmitting the PUSCH at transmit power value $P'_{PUSCH}$ that is the permissible value (threshold), when $P'_{PUSCH}$ exceeds $P_{CMAX}$. Thus, terminal 200 determines that one of the transmit powers for the PRACH preamble and the PUSCH does not satisfy the corresponding permissible value. In this case, terminal 200 performs the 4-step Random access procedure. In other words, terminal 200 transmits the PRACH preamble in Message A without transmitting the PUSCH.

As is understood, according to the present embodiment, terminal 200 selects the 2-step Random access procedure (in other words, transmission of the PRACH preamble and the PUSCH) or the 4-step Random access procedure (in other words, transmission of the PRACH preamble and non-transmission of PUSCH) depending on the channel state between base station 100 and terminal 200. For example, when the channel state is poor and the transmission quality does not satisfy predetermined reliability, terminal 200 selects the 4-step Random access procedure and does not transmit a PUSCH. It is thus possible to reduce PUSCH collision with other terminals.

Further, according to the present embodiment, terminal 200 can improve the received quality of the PUSCH in Message A by ramping up the transmit power for the PUSCH at the time of retransmission of Message A.

In addition, the present embodiment is effective, for example, when the transmission timing of the uplink signal described above is "timing 2," and the information requesting retransmission included in Message B (e.g., RAR) is "Option 1." Terminal 200 transmits the PRACH preamble and the PUSCH in retransmitted Message A. At this time, terminal 200 is capable of knowing based on the reception of the RAR that the PRACH preamble has been successfully detected in base station 100. In this instance, terminal 200 does not change the transmit power for the PRACH preamble as illustrated in FIG. 9, for example. It is thus possible to prevent an unnecessary increase in the transmit power for the PRACH preamble.

(Variation 1 of Embodiment 2)

The TBS for transmission of the PUSCH of Message A need not be fixed. For example, terminal 200 may select one TBS from a plurality of TBSs based on UP data (e.g., User plane data amount) actually transmitted by terminal 200.

In this instance, terminal 200 may scale the TBS of the PUSCH (e.g., select a smaller TBS), for example, when the ramped-up transmit power value of the PUSCH does not satisfy the permissible value. Then, terminal 200 may re-calculate the transmit power for the PUSCH for which the TBS is scaled, and may transmit a PRACH preamble and the PUSCH using the scaled TBS in Message A when the calculated transmit power satisfies the permissible value. This method makes it possible for terminal 200 to transmit a reliable PUSCH as long as it is possible, so as to reduce a delay caused by fallback to the 4-step Random access procedure. Note that, when the TBS cannot be scaled (no smaller TBS can be selected), terminal 200 may transmit the PRACH preamble without transmitting the PUSCH at the time of transmission of Message A (in other words, fall back to the 4-step Random access procedure).

(Variation 2 of Embodiment 2)

Different values may be configured for the increase amount of the transmit power value of the PUSCH (in other words, a power-ramping offset) between the case where terminal 200 performs the 2-step Random access procedure and the case where terminal 200 performs the 4-step Random access procedure.

(Variation 3 of Embodiment 2)

As the transmit power when terminal 200 falls back to the 4-step Random access procedure after having applied a plurality of times of power ramping in the 2-step Random access procedure, terminal 200 may continuingly configure the transmit power to which the power ramping has been applied in the 2-step Random access procedure. Thus, for example, it is possible for terminal 200 to prevent an increase in a delay caused by resetting, after Fallback operation, the transmit power to the transmit power at the initial transmission in the 4-step Random access procedure, and causing unnecessary transmission of a PRACH preamble.

(Embodiment 3)

Since a base station and a terminal according to the present embodiment have the same basic configurations as base station 100 and terminal 200 according to Embodiment 1, they will be described with reference to FIGS. 4 and 5.
In the present embodiment, at the timing of retransmission of an uplink signal (e.g., Message A) in the 2-step Random access procedure, terminal 200 continues the 2-step Random access procedure without Fallback to the 4-step Random access procedure when terminal 200 is indicated of a TPC command from base station 100. In other words, when terminal 200 is indicated of a TPC command (e.g., parameter relevant to transmit power control) from base station 100 when retransmitting Message A, terminal 200 transmits Message A including a PRACH preamble and a PUSCH based on the TPC command.
The present embodiment is effective, for example, when the transmission timing of the uplink signal described above is "timing 2," and the information requesting retransmission included in Message B (e.g., RAR) is "Option 2." Base station 100 uses an RAR to indicate terminal 200 having transmitted a detected PRACH preamble, of information on PUSCH resources as an indication requesting retransmission. At this time, base station 100 may include, in a UL grant included in the RAR, the TPC command in addition to the information on the PUSCH resources. Base station 100 can accurately control the transmit power of terminal 200 by the TPC command.
Further, for example, by controlling PUSCH resources between a plurality of terminals 200, base station 100 can prevent collision between the PUSCH resources for retransmission. Therefore, in the present embodiment, Fallback to the 4-step Random access procedure for the purpose of preventing collision between the PUSCH resources is not necessary. It is thus possible to reduce delay. Further, according to the present embodiment, it is possible to prevent occurrence of a discrepancy between base station 100 and terminal 200 in respect of the presence or absence of PUSCH transmission.

(Variations of Embodiment 3)

In Embodiment 3, the TPC command included in the RAR is not limited to the indication instructing the increase or decrease of the transmit power, and may include, for example, an indication by which base station 100 instructs terminal 200 to retransmit Message A of the 2-step Random access procedure (in other words, to transmit the PRACH preamble and the PUSCH) or to fall back to the 4-step Random access procedure. For example, when there are a large number of terminals 200 that retransmit a PUSCH and all terminals 200 cannot be accommodated at the same time, base station 100 can offload some terminals 200 to PUSCH resources of the 4-step Random access procedure or the 2-step Random access procedure.

(Embodiment 4)

Since a base station and a terminal according to the present embodiment have the same basic configurations as base station 100 and terminal 200 according to Embodiment 1, they will be described with reference to FIGS. 4 and 5.
In the present embodiment, at the timing of retransmission of an uplink signal (e.g., Message A) in the 2-step Random access procedure, terminal 200 ramps up the transmit power for both a PRACH preamble and a PUSCH of Message A (in other words, increases the transmit powers from the transmit powers at the time of previous transmission).
Further, when both the ramped-up transmit power value of the PRACH preamble and the ramped-up transmit power value of the PUSCH satisfy the permissible values (e.g., the transmit powers for base station 100 to receive signals of the PRACH preamble and the PUSCH with sufficient reliability), terminal 200 transmits the PRACH preamble and the PUSCH at the time of retransmission of Message A (in other words, selects the 2-step Random access procedure). On the other hand, when at least one of the ramped-up transmit power value of the PRACH preamble and the ramped-up transmit power value of the PUSCH does not satisfy the corresponding permissible value, terminal 200 transmits the PRACH preamble without transmitting the PUSCH at the time of retransmission of Message A (in other words, selects Fallback to the 4-step Random access procedure).

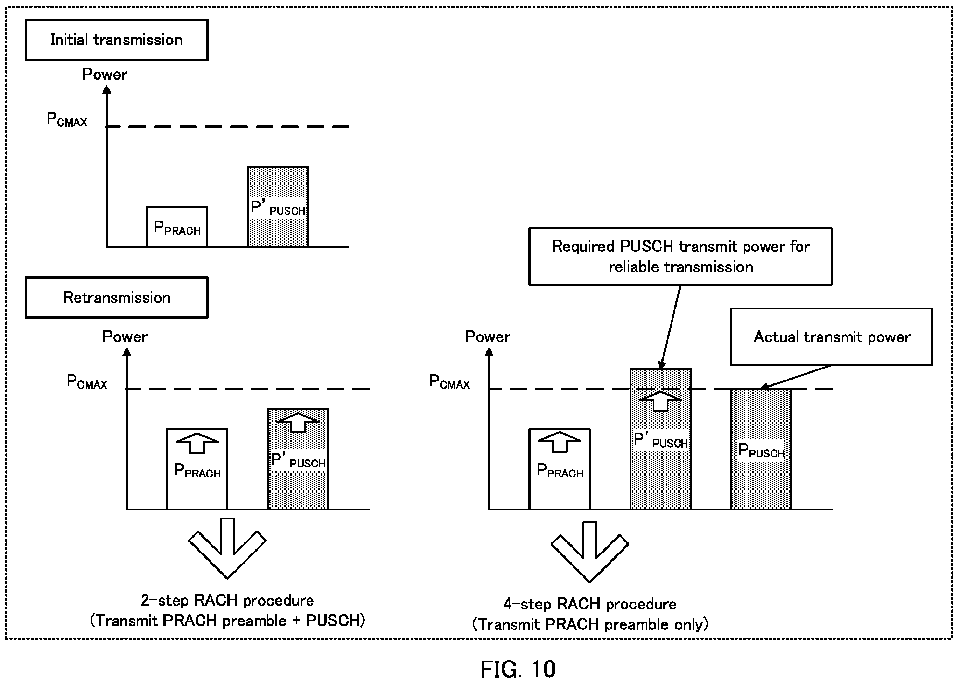

FIG. 10 illustrates an exemplary Random access procedure according to the present embodiment.
As illustrated in FIG. 10, at the time of retransmission of Message A, terminal 200 ramps up the transmit power for the PRACH preamble and the transmit power for the PUSCH in Message A.

Then, terminal 200 calculates the ramped-up transmit power for the PRACH preamble and the ramped-up transmit power for the PUSCH. For example, terminal 200 may configure, as the ramped-up transmit powers, values obtained by adding an offset value (e.g., a parameter configured by base station 100) to the transmit powers calculated prior to ramping.

Here, by way of example, a description will be given of a case where transmit power values prior to scaling by maximum transmit powers $P_{CMAX}$ at which terminal 200 is capable of transmission (e.g., values corresponding to the second terms of minimum functions in Equations 4 and 5) are configured as the permissible values. Note that, the values configured as the permissible values are not limited to these values, and may be other values.

For example, in FIG. 10, terminal 200 is capable of transmitting the PRACH preamble and the PUSCH at the transmit power values that are the permissible values (thresholds), when each of ramped-up transmit power $P_{PRACH}$ for the PRACH preamble and ramped-up transmit power $P'_{PUSCH}$ for the PUSCH is equal to or less than $P_{CMAX}$. Accordingly, terminal 200 determines that base station 100 is capable of receiving both signals of the PRACH preamble and the PUSCH with sufficient reliability, and determines that the transmit powers for Message A satisfy the permissible values. In this case, terminal 200 performs the 2-step Random access procedure. In other words, terminal 200 transmits the PRACH preamble and the PUSCH in Message A.

On the other hand, for example, in FIG. 10, when the transmit power value prior to scaling by $P_{CMAX}$ ($P'_{PUSCH}$ in FIG. 10) exceeds $P_{CMAX}$, terminal 200 scales the transmit power ($P_{PUSCH}$ in FIG. 10) down to $P_{CMAX}$. In addition, because of the scaling, terminal 200 is incapable of transmitting the PUSCH at transmit power value $P'_{PUSCH}$ that is the permissible value (threshold), when $P'_{PUSCH}$ exceeds $P_{CMAX}$. Thus, terminal 200 determines that one of the transmit powers for the PRACH preamble and the PUSCH does not satisfy the corresponding permissible value. In this case, terminal 200 performs the 4-step Random access procedure. In other words, terminal 200 transmits the PRACH preamble in Message A without transmitting the PUSCH.

As is understood, according to the present embodiment, terminal 200 selects the 2-step Random access procedure (in other words, transmission of the PRACH preamble and the PUSCH) or the 4-step Random access procedure (in other words, transmission of the PRACH preamble and non-transmission of PUSCH) depending on the channel state between base station 100 and terminal 200. For example, when the channel state is poor and the transmission quality does not satisfy predetermined reliability, terminal 200 selects the 4-step Random access procedure and does not transmit a PUSCH. It is thus possible to reduce PUSCH collision with other terminals.

Further, according to the present embodiment, it is possible for terminal 200 to improve the received quality of Message A by ramping up the transmit power for the PRACH preamble and the transmit power for the PUSCH at the time of retransmission of Message A.

In addition, the present embodiment is effective, for example, when the transmission timing of an uplink signal by the above-described terminal is "timing 3." Terminal 200 increases the transmit powers for both the PRACH preamble and the PUSCH since base station 100 has failed to detect Message A. Accordingly, it is possible to improve the received qualities of both the PRACH preamble and the PUSCH at the base station.

(Variation 1 of Embodiment 4)

The TBS for transmission of the PUSCH of Message A need not be fixed. For example, terminal 200 may select one TBS from a plurality of TBSs based on UP data (e.g., User plane data amount) actually transmitted by terminal 200.

In this instance, terminal 200 may scale the TBS of the PUSCH (e.g., select a smaller TBS), for example, when the ramped-up transmit power value of the PUSCH does not satisfy the permissible value. Then, terminal 200 may re-calculate the transmit power for the PUSCH for which the TBS is scaled, and may transmit a PRACH preamble and the PUSCH using the scaled TBS in Message A when the calculated transmit power satisfies the permissible value. This method makes it possible for terminal 200 to transmit a reliable PUSCH as long as it is possible, so as to reduce a delay caused by fallback to the 4-step Random access procedure. Note that, when the TBS cannot be scaled (no smaller TBS can be selected), terminal 200 may transmit the PRACH preamble without transmitting the PUSCH at the time of transmission of Message A (in other words, fall back to the 4-step Random access procedure).

(Variation 2 of Embodiment 4)

A calculation method of calculating the ramped-up transmit powers, for example, can calculate, as the ramped-up transmit powers, values obtained by adding an offset value (a parameter configured by the base station) to transmit powers calculated prior to ramping. At this time, power-ramping offset values (Power ramping step) different between the 4-step Random access procedure and the 2-step Random access procedure may be configured. For example, the 2-step Random access procedure is expected to be provided in use cases that require low latency. Accordingly, a Power ramping step greater in the 2-step Random access procedure than in the 4-step Random access procedure is configured. Such a Power ramping step makes it possible to avoid multiple times of retransmission to reduce delay. The Power ramping steps may be configurable independently between the 4-step Random access procedure and 2-step Random access procedure, or a method may be employed in which the Power ramping step for the 2-step Random access procedure after multiplied by a factor (X times) or with the addition of an offset (+Y) may be configured as the Power ramping step for the 4-step Random access procedure. The value of X or Y may be a parameter configured by base station 100.

(Variation 3 of Embodiment 4)

As the transmit powers when terminal 200 falls back to the 4-step Random access procedure after having applied a plurality of times of power ramping in the 2-step Random access procedure, terminal 200 may continuingly configure the transmit powers to which the power ramping has been applied in the 2-step Random access procedure. That is, terminal 200 may configure the increased transmit powers in the 2-step Random access procedure as the transmit powers for Message A in the 4-step Random access procedure when Message A is retransmitted based on the 4-step Random access procedure after Message A was transmitted based on the 2-step Random access procedure.

Thus, for example, it is possible for terminal 200 to prevent an increase in a delay caused by resetting, after Fallback operation, the transmit powers to the transmit powers at the initial transmission in the 4-step Random access procedure, and causing unnecessary transmission of a PRACH preamble.

(Variation 4 of Embodiment 4)

In the 2-step Random access procedure, terminal 200 may configure the counter upper limit value of the number of transmissions (or retransmissions) of Message A. For example, when the number of transmissions exceeds the counter upper limit value, terminal 200 may fall back to the 4-step Random access procedure. It is thus possible to avoid frequent PUSCH retransmissions to prevent PUSCH conflicts.

(Embodiment 5)

As described above, the calculation method of calculating the transmit powers in the 2-step Random access procedure may apply the Open-loop control (e.g., see Equations 4 and 5) in which the transmit power control in the 4-step Random access procedure is used.

For example, in the transmit power control on the PRACH preamble, the Open-loop control is applied in both the 2-step Random access procedure and the 4-step Random access procedure. Thus, it is assumed that the same calculation method is applied as illustrated in Equation 1 or 4.

However, in the 2-step Random access procedure, the PUSCH is included in Message A. Thus, the robustness with respect to a transmission timing difference between terminals is low. Therefore, the 2-step Random access procedure is expected to be applied in small cell environments. Accordingly, in the 2-step Random access procedure, it is highly likely that a RACH format having a smaller PRACH preamble length (e.g., fewer symbols) than in the 4-step Random access procedure is used.

Meanwhile, the 4-step Random access procedure is expected to be applied for covering a wide-area cell. Accordingly, in the 4-step Random access procedure, it is highly likely that a RACH format having a greater PRACH preamble length (e.g., more symbols) than in the 2-step Random access procedure is used.

Here, when the transmit power per symbol is the same, the greater the PRACH preamble length, the more the power is added. For this reason, in the 4-step Random access procedure in which the RACH preamble length is longer, the base station is capable of receiving the PRACH preamble with a higher received signal power. On the other hand, in the 2-step Random access procedure in which the RACH preamble length is shorter, there is a possibility that a sufficient received power cannot be obtained at the base station.

Therefore, in the present embodiment, different target received power values $P_{PRACH\_target}$ for the PRACH preamble for calculating the transmit powers for the 2-step Random access procedure and the 4-step Random access procedure are used.

Note that, since a base station and a terminal according to the present embodiment have the same basic configurations as base station 100 and terminal 200 according to Embodiment 1, they will be described with reference to FIGS. 4 and 5.

<Option 1>

In Option 1, independent target received power value $P_{PRACH\_target}$ for the PRACH preamble is configured for each of the 2-step Random access procedure and 4-step Random access procedure.

For example, transmit power $P_{PRACH}$ for the PRACH preamble is calculated as follows:

$$P_{PRACH} = \min\{P_{CMAX}, P_{PRACH\_target}(x) + PL\} \qquad ... \text{(Equation 6)}.$$

Here, x is a parameter for distinguishing between the 2-step Random access procedure and the 4-step Random access procedure. For example, x = 0 represents the 2-step Random access procedure, and x = 1 represents the 4-step Random access procedure.

For example, in Equation 6, $P_{PRACH\_target}(0)$ and $P_{PRACH\_target}(1)$ are values different from each other, and $P_{PRACH\_target}(0) > P_{PRACH\_target}(1)$. Thus, for example, in the 2-step Random access procedure, terminal 200 can easily configure a higher transmit power for the PRACH preamble, to improve the received power at base station 100. On the other hand, for example, in the 4-step Random access procedure, terminal 200 can avoid configuring an unnecessarily high transmit power for the PRACH preamble.

Option 1 makes it possible to configure appropriate target received power values for the PRACH preambles for the 2-step Random access procedure and the 4-step Random access procedure, respectively.

<Option 2>

In Option 2, a parameter representing the number of PRACH preamble transmission symbols (or PRACH preamble length) is added to the target received power value for the PRACH preamble for calculating the transmit power.

For example, the transmit power for the PRACH preamble is calculated as follows:

$$P_{PRACH} = \min\{P_{CMAX}, P_{PRACH\_target} + \beta + PL\} \qquad ... \text{(Equation 7)}.$$

Here, $\beta$ is a factor representing the number of transmission symbols of the PRACH preamble. For example, $\beta = 0$ may be configured when the number of transmission symbols of the PRACH preamble is 1 slot long (14 symbols), and $\beta = 3$ may be configured when the number of transmission symbols of the PRACH preamble is 0.5 slot long (7 symbols). Note that the value of $\beta$ is not limited to these.

In Option 2, even when the 2-step Random access procedure and the 4-step Random access procedure use respective RACH formats with different symbol lengths different between the procedures, it is possible to configure an appropriate target received power value for each of the RACH formats.

Option 1 and Option 2 have been described above.

Note that Option 1 and Option 2 may be combined. In addition, terminal 200 may select one of the 2-step Random access procedure and the 4-step Random access procedure by applying at least one of Embodiments 1 to 4 after calculating the transmit power for the PRACH preamble based on the methods described in the present embodiment.

In addition, here, as one example, the case has been described in which the transmit power for the PRACH preamble in the 2-step Random access procedure is set higher than the transmit power for the PRACH preamble in the 4-step Random access procedure. However, the present invention is not limited to this, and the transmit power for the PRACH preamble in the 4-step Random access procedure may be set higher than the transmit power for the PRACH preamble in the 2-step Random access procedure.

(Embodiment 6)

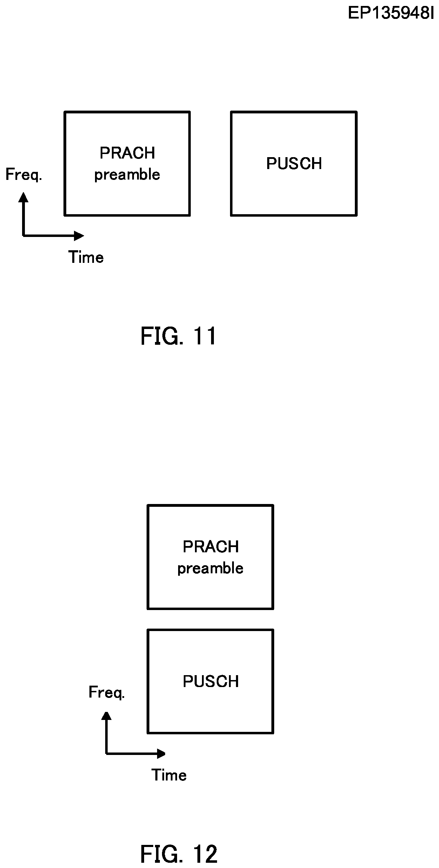

In Embodiments 1 to 5 described above, a configuration is assumed in which the PRACH preamble and the PUSCH are time-division multiplexed (TDMed) in Message A as illustrated in FIG. 11, for example. However, in Message A, multiplexing is not limited to time-division multiplexing, and the PRACH preamble and the PUSCH may be frequency-division multiplexed (FDMed) as illustrated in FIG. 12, for example.

In the case of FDM, the terminal calculates the sum of the transmit power value of the PRACH preamble and the transmit power value of the PUSCH (in other words, total transmit power) based on the transmit power value of the PRACH preamble and the transmit power value of the PUSCH. Then, the terminal compares the calculated total transmit power with the maximum transmit power at which the terminal is capable of transmission, and when the total transmit power is greater than the maximum transmit power, the terminal performs power scaling.

However, when the transmit powers for both the PRACH preamble and the PUSCH are evenly scaled, it may happen that none of the transmit power values satisfy the permissible values (e.g., the transmit powers allowing the base station to receive signals of the PRACH preamble and the PUSCH with sufficient reliability).

In this respect, the present embodiment will be described in relation to an operation performed by a terminal when the sum (total transmit power) of the transmit power value of the PRACH preamble and the transmit power value of the PUSCH is greater than the maximum transmit power.

Note that, since a base station and a terminal according to the present embodiment have the same basic configurations as base station 100 and terminal 200 according to Embodiment 1, they will be described with reference to FIGS. 4 and 5.

<Option 1>

In Option 1, terminal 200 falls back to the 4-step Random access procedure when the total transmit power is greater than the maximum transmit power.

For example, when the total transmit power is greater than the maximum transmit power, terminal 200 transmits the PRACH preamble without transmitting the PUSCH at the time of transmission of Message A.

Accordingly, even when the calculated total transmit power is greater than the maximum transmit power, it is possible to reduce unnecessary collision due to a PUSCH by terminal 200 for which the transmission quality cannot satisfy predetermined reliability.

<Option 2>

In Option 2, terminal 200 scales the transmit power for the PUSCH when the total transmit power is greater than the max transmit power. In other words, terminal 200 does not scale the transmit power for the PRACH preamble.

Note that in a method of scaling the transmit power for the PUSCH, the TBS for transmission of the PUSCH of Message A need not be fixed. For example, terminal 200 may select one TBS from a plurality of TBSs based on UP data (e.g., User plane data amount) actually transmitted by terminal 200.

In this instance, terminal 200 calculates, for example, the sum (total transmit power) of the transmit power value of the PRACH preamble and the transmit power value of the PUSCH, and compares the calculated transmit power with the maximum transmit power at which the terminal is capable of transmission. When the total transmit power is greater than the maximum transmit power, terminal 200 may scale the TBS (e.g., select a smaller TBS) of the PUSCH. Then, terminal 200 may re-calculate the transmit power for the PUSCH for which the TBS is scaled, and may transmit the PRACH preamble and the PUSCH using the scaled TBS in Message A when the calculated transmit power satisfies the permissible value. This method makes it possible for terminal 200 to transmit a reliable PUSCH as long as it is possible, so as to reduce a delay caused by fallback to the 4-step Random access procedure. Note that, when the TBS cannot be scaled (no smaller TBS can be selected), terminal 200 may transmit the PRACH preamble without transmitting the PUSCH at the time of transmission of Message A (in other words, fall back to the 4-step Random access procedure).

As is understood, according to the present embodiment, terminal 200 selects the 2-step Random access procedure (in other words, transmission of the PRACH preamble and the PUSCH) or the 4-step Random access procedure (in other words, transmission of the PRACH preamble and non-transmission of PUSCH) depending on the channel state between base station 100 and terminal 200. For example, when the channel state is poor and the transmission quality does not satisfy predetermined reliability, terminal 200 selects the 4-step Random access procedure and does not transmit a PUSCH. It is thus possible to reduce PUSCH collision with other terminals.

Exemplary embodiments of the present disclosure have been described above.

(Other Embodiments)

    (1) Examples of the timing at which terminal 200 selects either one of the 2-step Random access procedure and 4-step Random access procedure includes the following timings.

<Option 1>

Terminal 200 may select one of the 2-step Random access procedure and the 4-step Random access procedure at all of above-described timings 1 to 3. Further, a selection method of selecting the Random access procedure may be different between timings 1 to 3 described above.

<Option 2>

Terminal 200 may select one of the 2-step Random access procedure and the 4-step Random access procedure at a specific timing among above-described timings 1 to 3. For example, there may be one specific timing or a plurality of specific timings. Further, the selection method of selecting the Random access procedure may be different between timings 1 to 3 described above.

(2) For example, the following method may be used as a configuration method of configuring a parameter for calculating the transmit powers when Fallback is performed from the 2-step Random access procedure to the 4-step Random access procedure.

<Option 1>

Terminal 200 continuingly uses a parameter for the 2-step Random access procedure in the 4-step Random access procedure.

<Option 2>

Terminal 200 uses a parameter for the 4-step Random access procedure.

Further, transmit power control parameters for the 2-step Random access procedure and transmit power control parameters for the 4-step Random access procedure may be configured independently of each other. For example, the transmit power control parameters include target received power value $P_{PRACH\_target}$ for the PRACH preamble, an offset value for the PUSCH with respect to the target received power value for the PRACH preamble, the maximum transmit power at which terminal 200 is capable of transmission, weighting factor $\alpha$ representing a compensation rate for a path loss, and the like.

(3) The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to an embodiment of the present disclosure includes: control circuitry that selects one of a first method and a second method based on a channel quality, the first method being for transmitting a random access signal including a preamble part and a data part, the second method being for transmitting the random access signal including the preamble part but not including the data part; and transmission circuitry that transmits the random access signal based on the selected method.

In an exemplary embodiment of the present disclosure, the channel quality is transmit power for the random access signal, and the control circuitry selects the first method when the transmit power is equal to or greater than a threshold, or selects the second method when the transmit power is less than the threshold.

In an exemplary embodiment of the present disclosure, the channel quality is received quality of a downlink signal.

The following is related to a claimed embodiment. In an exemplary embodiment of the present disclosure, a resource of the random access signal is associated with each of a plurality of the downlink signals, and, in the first method, the transmission circuitry transmits the random access signal using the resource associated with a signal of the plurality of downlink signals for which the received quality is equal to or greater than a first threshold, or, when there is no signal for which the received quality is equal to or greater than the first threshold among the plurality of downlink signals, the transmission circuitry transmits the random access signal based on the second method.

In an exemplary embodiment of the present disclosure, in the second method, the transmission circuitry transmits the random access signal using the resource associated with a signal of the plurality of downlink signals for which the received quality is equal to or greater than a second threshold, or transmits the random access signal based on the resource associated with any one of the plurality of downlink signals when there is no signal for which the received quality is equal to or greater than the second threshold among the plurality of downlink signals, and the first threshold is different from the second threshold.

In an exemplary embodiment of the present disclosure, the channel quality is transmit power for the data part, the control circuitry reduces a size of the data part when the transmit power is less than a threshold, and the transmission circuitry transmits the random access signal based on the first method when the transmit power after reduction of the size is equal to or greater than the threshold.

In an exemplary embodiment of the present disclosure, the control circuitry increases transmit power for the data part from the transmit power at a time of previous transmission without changing transmit power for the preamble part from the transmit power at the time of previous transmission when the random access signal is to be retransmitted.

In an exemplary embodiment of the present disclosure, the channel quality is the transmit power for the data part, and the transmission circuitry transmits the random access signal based on the first method when the increased transmit power for the data part is equal to or greater than a threshold, or transmits the random access signal based on the second method when the increased transmit power for the data part is less than the threshold.

In an exemplary embodiment of the present disclosure, an increase amount of the transmit power is different between the first method and the second method.

In an exemplary embodiment of the present disclosure, when the random access signal is to be retransmitted based on the second method after the random access signal was transmitted based on the first method, the control circuitry configures the transmit power increased in the first method as transmit power for the random access signal in the second method.

In an exemplary embodiment of the present disclosure, when control information including a parameter relevant to transmit power control is indicated by the base station when the random access signal is to be retransmitted, the transmission circuitry transmits, based on the parameter, the random access signal that is based on the first method.

In an exemplary embodiment of the present disclosure, the control information further includes information indicating one of the first method and the second method, and the control circuitry selects one of the first method and the second method based on the control information.

In an exemplary embodiment of the present disclosure, the control circuitry increases first transmit power for the preamble part and second transmit power for the data part when the random access signal is to be retransmitted.

In an exemplary embodiment of the present disclosure, information on the channel quality is the first transmit power and the second transmit power, and the control circuitry selects the first method when both the first transmit power and the second transmit power are equal to or greater than a threshold, or selects the second method when at least one of the first transmit power and the second transmit power is less than the threshold.

In an exemplary embodiment of the present disclosure, an increase amount of the transmit power is different between the first method and the second method.

In an exemplary embodiment of the present disclosure, when the random access signal is to be retransmitted based on the second method after the random access signal was transmitted based on the first method, the control circuitry configures the transmit power increased in the first method as transmit power for the random access signal in the second method.

In an exemplary embodiment of the present disclosure, the control circuitry selects the second method when a number of retransmissions of the random access signal based on the first method exceeds an upper limit value.

A transmission method according to an exemplary embodiment of the present disclosure includes: selecting one of a first method and a second method based on a channel quality, the first method being for transmitting a random access signal including a preamble part and a data part, the second method being for transmitting the random access signal including the preamble part but not including the data part; and transmitting the random access signal based on the selected method.

Industrial Applicability

An exemplary embodiment of the present disclosure is useful for mobile communication systems.

Reference Signs List

    100 Base station
    101, 209 Controller
    102 Data generator
    103, 106, 109, 211, 213 Encoder
    104, 107, 110, 212, 214 Modulator
    105 Higher control signal generator
    108 Downlink control signal generator
    111, 215 Signal allocator
    112, 216 IFFT section
    113, 217 Transmitter
    114, 201 Antenna
    115, 202 Receiver
    116, 203 FFT section
    117, 204 Extractor
    118 Detector
    119, 205 Demodulator
    120, 206, 208 Decoder
    200 Terminal
    207 Downlink control signal demodulator
    210 PRACH preamble generator

**Claims**

1. A terminal (200), comprising:

    control circuitry (209) configured to select one of a first method and a second method based on a channel quality, wherein the channel quality is received quality of a downlink signal, the first method being for transmitting a random access signal including a preamble part and a data part, the second method being for transmitting the random access signal including the preamble part but not including the data part; and
    transmission circuitry (217) configured to transmit the random access signal based on the selected method, **characterised in that**:

        wherein in the first method, the transmission circuitry is configured to transmit the random access signal using a resource associated with a signal of the plurality of downlink signals for which the received quality is equal to or greater than a first threshold,
        wherein in the second method, the transmission circuitry is configured to transmit the random access signal using a resource associated with a signal of the plurality of downlink signals for which the received quality is equal to or greater than a second threshold, and
        wherein the first threshold is different from the second threshold,
        wherein the transmission circuitry (217) is configured to retransmit the random access signal based on the first method when a response of the random access signal is not received within a specified period after the transmission of the random access signal based on the first method.

2. The terminal of claim 1, wherein
   in the first method, when there is no signal for which the received quality is equal to or greater than the first threshold among the plurality of downlink signals, the transmission circuitry is configured to transmit the random access signal based on the second method.

3. The terminal according to claim 1, wherein,

in the second method, the transmission circuitry is configured to transmit the random access signal based on the resource associated with any one of the plurality of downlink signals when there is no signal for which the received quality is equal to or greater than the second threshold among the plurality of downlink signals.

4. The terminal according to claim 1, wherein

   the channel quality is transmit power for the data part,
   the control circuitry reduces a size of the data part when the transmit power is less than a threshold, and
   the transmission circuitry transmits the random access signal based on the first method when the transmit power after reduction of the size is equal to or greater than the threshold.

5. The terminal according to claim 1, wherein
   the control circuitry is configured to increase transmit power for the data part from the transmit power at a time of previous transmission without changing transmit power for the preamble part from the transmit power at the time of previous transmission when the random access signal is to be retransmitted.

6. The terminal according to claim 5, wherein

   the channel quality is the transmit power for the data part, and
   the transmission circuitry transmits the random access signal based on the first method when the increased transmit power for the data part is equal to or greater than a threshold, or transmits the random access signal based on the second method when the increased transmit power for the data part is less than the threshold.

7. The terminal according to claim 5, wherein
   an increase amount of the transmit power is different between the first method and the second method.

8. The terminal according to claim 5, wherein,
   when the random access signal is to be retransmitted based on the second method after the random access signal was transmitted based on the first method, the control circuitry is configured to configure the transmit power increased in the first method as transmit power for the random access signal in the second method.

9. The terminal according to claim 1, wherein,
   when control information including a parameter relevant to transmit power control is indicated by a base station (100) when the random access signal is to be retransmitted, the transmission circuitry is configured to transmit, based on the parameter, the random access signal that is based on the first method.

10. The terminal according to claim 9, wherein

    the control information further includes information indicating one of the first method and the second method, and
    the control circuitry is configured to select one of the first method and the second method based on the control information.

11. The terminal according to claim 1, wherein
    the control circuitry is configured to increase first transmit power for the preamble part and second transmit power for the data part when the random access signal is to be retransmitted.

12. The terminal according to claim 11, wherein

    information on the channel quality is the first transmit power and the second transmit power, and
    the control circuitry is configured to select the first method when both the first transmit power and the second transmit power are equal to or greater than a threshold, or to select the second method when at least one of the first transmit power and the second transmit power is less than the threshold.

13. The terminal according to claim 11, wherein
    an increase amount of the transmit power is different between the first method and the second method.

14. The terminal according to claim 11, wherein,
    when the random access signal is to be retransmitted based on the second method after the random access signal was transmitted based on the first method, the control circuitry is configured to configure the transmit power increased in the first method as transmit power for the random access signal in the second method.

15. The terminal according to claim 1, wherein
the control circuitry is configured to select the second method when a number of retransmissions of the random access signal based on the first method exceeds an upper limit value.

16. A transmission method, comprising:

selecting one of a first method and a second method based on a channel quality, wherein the channel quality is received quality of a downlink signal, the first method being for transmitting a random access signal including a preamble part and a data part, the second method being for transmitting the random access signal including the preamble part but not including the data part; and
transmitting the random access signal based on the selected method, **characterised in that**:

wherein in the first method, the transmitting of the random access signal is done using a resource associated with a signal of the plurality of downlink signals for which the received quality is equal to or greater than a first threshold,
wherein in the second method, the transmitting of the random access signal is done using a resource associated with a signal of the plurality of downlink signals for which the received quality is equal to or greater than a second threshold, and
wherein the first threshold is different from the second threshold, and
wherein the transmission method further comprises:
retransmitting the random access signal based on the first method when a response of the random access signal is not received within a specified period after the transmission of the random access signal based on the first method.

**Patentansprüche**

1. Endgerät (200), umfassend:

eine Steuerschaltung (209), die dazu eingerichtet ist, ein erstes Verfahren oder ein zweites Verfahren auf der Grundlage einer Kanalqualität auszuwählen, wobei die Kanalqualität die empfangene Qualität eines Downlink-Signals ist, das erste Verfahren zum Senden eines Direktzugriffssignals dient, das einen Präambelteil und einen Datenteil umfasst, und das zweite Verfahren zum Senden des Direktzugriffssignals dient, das den Präambelteil umfasst, jedoch nicht den Datenteil umfasst; und
eine Sendeschaltung (217), die dazu eingerichtet ist, das Direktzugriffssignal auf der Grundlage des ausgewählten Verfahrens zu senden,
**dadurch gekennzeichnet, dass**
in dem ersten Verfahren die Sendeschaltung dazu eingerichtet ist, das Direktzugriffssignal unter Verwendung einer Ressource zu senden, die einem Signal aus der Vielzahl von Downlink-Signalen zugeordnet ist, für das die empfangene Qualität gleich oder größer als ein erster Schwellenwert ist,
in dem zweiten Verfahren die Sendeschaltung dazu eingerichtet ist, das Direktzugriffssignal unter Verwendung einer Ressource zu senden, die einem Signal aus der Vielzahl von Downlink-Signalen zugeordnet ist, für das die empfangene Qualität gleich oder größer als ein zweiter Schwellenwert ist,
sich der erste Schwellenwert von dem zweiten Schwellenwert unterscheidet,
und die zweite Sendeschaltung (271) dazu eingerichtet ist, das Direktzugriffssignal auf der Grundlage des ersten Verfahrens erneut zu senden, wenn eine Antwort des Direktzugriffssignals nicht innerhalb eines bestimmten Zeitraums nach der Sendung des Direktzugriffssignals auf der Grundlage des ersten Verfahrens empfangen wurde.

2. Endgerät nach Anspruch 1, bei dem
in dem ersten Verfahren, wenn es kein Signal gibt, für das die empfangene Qualität gleich oder größer als der erste Schwellenwert unter der Vielzahl von Downlink-Signalen ist, die Sendeschaltung dazu eingerichtet ist, das Direktzugriffssignal auf der Grundlage des zweiten Verfahrens zu senden.

3. Endgerät nach Anspruch 1, bei dem

in dem zweiten Verfahren die Sendeschaltung dazu eingerichtet ist, das Direktzugriffssignal auf der Grundlage der Ressource zu senden, die einem beliebigen der Vielzahl von Downlink-Signalen zugeordnet ist, wenn es unter der Vielzahl von Downlink-Signalen kein Signal gibt, für das die empfangene Qualität gleich oder größer als der zweite Schwellenwert ist.

4. Endgerät nach Anspruch 1, bei dem

die Kanalqualität die Sendeleistung für den Datenteil ist,
die Steuerschaltung eine Größe des Datenteils reduziert, wenn die Sendeleistung unter einem Schwellenwert liegt, und
die Sendeschaltung das Direktzugriffssignal auf der Grundlage des ersten Verfahrens sendet, wenn die Sendeleistung nach der Reduzierung der Größe gleich oder größer als der Schwellenwert ist.

5. Endgerät nach Anspruch 1, bei dem
die Steuerschaltung dazu eingerichtet ist, die Sendeleistung für den Datenteil gegenüber der Sendeleistung zum Zeitpunkt der vorherigen Sendung zu erhöhen, ohne die Sendeleistung für den Präambelteil gegenüber der Sendeleistung zum Zeitpunkt der vorherigen Sendung zu ändern, wenn das Direktzugriffssignal erneut gesendet werden soll.

6. Endgerät nach Anspruch 5, bei dem

die Kanalqualität die Sendeleistung für den Datenteil ist, und
die Sendeschaltung das Direktzugriffssignal auf der Grundlage des ersten Verfahrens sendet, wenn die erhöhte Sendeleistung für den Datenteil gleich oder größer als ein Schwellenwert ist, oder das Direktzugriffssignal auf der Grundlage des zweiten Verfahrens sendet, wenn die erhöhte Sendeleistung für den Datenteil kleiner als der Schwellenwert ist.

7. Endgerät nach Anspruch 5, bei dem
ein Erhöhungsbetrag der Sendeleistung zwischen dem ersten Verfahren und dem zweiten Verfahren unterschiedlich ist.

8. Endgerät nach Anspruch 5, bei dem,
wenn das Direktzugriffssignal auf der Grundlage des zweiten Verfahrens erneut gesendet werden soll, nachdem das Direktzugriffssignal auf der Grundlage des ersten Verfahrens gesendet wurde, die Steuerschaltung dazu eingerichtet ist, die bei dem ersten Verfahren erhöhte Sendeleistung als Sendeleistung für das Direktzugriffssignal bei dem zweiten Verfahren zu konfigurieren.

9. Endgerät nach Anspruch 1, bei dem,
wenn Steuerinformationen, die einen Parameter enthalten, der für die Sendeleistungssteuerung relevant ist, von einer Basisstation (100) angezeigt werden, wenn das Direktzugriffssignal erneut gesendet werden soll, die Sendeschaltung dazu eingerichtet ist, auf der Grundlage des Parameters das Direktzugriffssignal zu senden, das auf dem ersten Verfahren basiert.

10. Endgerät nach Anspruch 9, bei dem

die Steuerinformationen weiterhin Informationen umfassen, die das erste oder das zweite Verfahren kennzeichnen, und
die Steuerschaltung dazu eingerichtet ist, auf der Grundlage der Steuerinformationen entweder das erste Verfahren oder das zweite Verfahren auszuwählen.

11. Endgerät nach Anspruch 1, bei dem
die Steuerschaltung dazu eingerichtet ist, die erste Sendeleistung für den Präambelteil und die zweite Sendeleistung für den Datenteil zu erhöhen, wenn das Direktzugriffssignal erneut gesendet werden soll.

12. Endgerät nach Anspruch 11, bei dem

die Informationen über die Kanalqualität die erste Sendeleistung und die zweite Sendeleistung sind, und
die Steuerschaltung dazu eingerichtet ist, das erste Verfahren auszuwählen, wenn sowohl die erste Sendeleistung als auch die zweite Sendeleistung gleich oder größer als ein Schwellenwert sind, oder das zweite Verfahren auszuwählen, wenn die erste Sendeleistung und/oder die zweite Sendeleistung kleiner als der Schwellenwert sind.

**13.** Endgerät nach Anspruch 11, bei dem
ein Erhöhungsbetrag der Sendeleistung zwischen dem ersten Verfahren und dem zweiten Verfahren unterschiedlich ist.

**14.** Endgerät nach Anspruch 11, bei dem,
wenn das Direktzugriffssignal auf der Grundlage des zweiten Verfahrens erneut gesendet werden soll, nachdem das Direktzugriffssignal auf der Grundlage des ersten Verfahrens gesendet wurde, die Steuerschaltung dazu eingerichtet ist, die bei dem ersten Verfahren erhöhte Sendeleistung als Sendeleistung für das Direktzugriffssignal bei dem zweiten Verfahren zu konfigurieren.

**15.** Endgerät nach Anspruch 1, bei dem
die Steuerschaltung dazu eingerichtet ist, das zweite Verfahren auszuwählen, wenn eine Anzahl von Neusendungen des Direktzugriffssignals auf der Grundlage des ersten Verfahrens einen oberen Grenzwert überschreitet.

**16.** Sendeverfahren, umfassend:

Auswählen eines ersten Verfahrens oder eines zweiten Verfahrens auf der Grundlage einer Kanalqualität, wobei die Kanalqualität die empfangene Qualität eines Downlink-Signals ist, das erste Verfahren zum Senden eines Direktzugriffssignals dient, das einen Präambelteil und einen Datenteil umfasst, und das zweite Verfahren zum Senden des Direktzugriffssignals dient, das den Präambelteil, jedoch nicht den Datenteil umfasst; und
Senden des Direktzugriffssignals auf der Grundlage des gewählten Verfahrens,
**dadurch gekennzeichnet, dass**
in dem ersten Verfahren das Senden des Direktzugriffssignals unter Verwendung einer Ressource erfolgt, die mit einem Signal aus der Vielzahl von Downlink-Signalen assoziiert ist, für das die empfangene Qualität gleich oder größer als ein erster Schwellenwert ist,
in dem zweiten Verfahren das Senden des Direktzugriffssignals unter Verwendung einer Ressource erfolgt, die mit einem Signal der Vielzahl von Downlink-Signalen assoziiert ist, für das die empfangene Qualität gleich oder größer als ein zweiter Schwellenwert ist,
sich der erste Schwellenwert von dem zweiten Schwellenwert unterscheidet und
das Sendeverfahren weiterhin umfasst:
erneutes Senden des Direktzugriffssignals auf der Grundlage des ersten Verfahrens, wenn eine Antwort des Direktzugriffssignals nicht innerhalb eines bestimmten Zeitraums nach der Sendung des Direktzugriffssignals auf der Grundlage des ersten Verfahrens empfangen wurde.

**Revendications**

**1.** Terminal (200), comprenant :

un circuit de commande (209) configuré pour sélectionner un d'un premier procédé et d'un deuxième procédé selon une qualité de canal, dans lequel la qualité de canal est une qualité reçue d'un signal de liaison descendante, le premier procédé étant destiné à une transmission d'un signal d'accès aléatoire incluant une partie de préambule et une partie de données, le deuxième procédé étant destiné à une transmission du signal d'accès aléatoire incluant la partie de préambule mais n'incluant pas la partie de données ; et
un circuit de transmission (217) configuré pour transmettre le signal d'accès aléatoire selon le procédé sélectionné, **caractérisé en ce que** :

dans le premier procédé, le circuit de transmission est configuré pour transmettre le signal d'accès aléatoire en utilisant une ressource associée à un signal de la pluralité de signaux de liaison descendante pour lequel la qualité reçue est supérieure ou égale à un premier seuil,
dans le deuxième procédé, le circuit de transmission est configuré pour transmettre le signal d'accès aléatoire en utilisant une ressource associée à un signal de la pluralité de signaux de liaison descendante pour lequel la qualité reçue est supérieure ou égale à un deuxième seuil, et
le premier seuil est différent du deuxième seuil,

le circuit de transmission (217) est configuré pour retransmettre le signal d'accès aléatoire selon le premier procédé lorsqu'une réponse du signal d'accès aléatoire n'est pas reçue dans une période spécifiée après la transmission du signal d'accès aléatoire selon le premier procédé.

2. Terminal selon la revendication 1 dans lequel
dans le premier procédé, en l'absence d'un signal pour lequel la qualité reçue est supérieure ou égale au premier seuil parmi la pluralité de signaux de liaison descendante, le circuit de transmission est configuré pour transmettre le signal d'accès aléatoire selon le deuxième procédé.

3. Terminal selon la revendication 1, dans lequel,
dans le deuxième procédé, le circuit de transmission est configuré pour transmettre le signal d'accès aléatoire selon la ressource associée à l'un quelconque de la pluralité de signaux de liaison descendante en l'absence d'un signal pour lequel la qualité reçue est supérieure ou égale au deuxième seuil parmi la pluralité de signaux de liaison descendante.

4. Terminal selon la revendication 1, dans lequel

la qualité de canal est une puissance de transmission pour la partie de données,
le circuit de commande diminue une taille de la partie de données lorsque la puissance de transmission est inférieure à un seuil, et
le circuit de transmission transmet le signal d'accès aléatoire selon le premier procédé lorsque la puissance de transmission après diminution de la taille est supérieure ou égale au seuil.

5. Terminal selon la revendication 1, dans lequel
le circuit de commande est configuré en outre pour augmenter une puissance de transmission pour la partie de données à partir de la puissance de transmission à un moment de transmission précédente sans changer de puissance de transmission pour la partie de préambule à partir de la puissance de transmission au moment de transmission précédente lorsque le signal d'accès aléatoire est à retransmettre.

6. Terminal selon la revendication 5, dans lequel

la qualité de canal est la puissance de transmission pour la partie de données, et
le circuit de transmission transmet le signal d'accès aléatoire selon le premier procédé lorsque la puissance de transmission augmentée pour la partie de données est supérieure ou égale à un seuil, ou transmet le signal d'accès aléatoire selon le deuxième procédé lorsque la puissance de transmission augmentée pour la partie de données est inférieure au seuil.

7. Terminal selon la revendication 5, dans lequel
une quantité augmentée de la puissance de transmission est différente entre le premier procédé et le deuxième procédé.

8. Terminal selon la revendication 5, dans lequel,
lorsque le signal d'accès aléatoire est à retransmettre selon le deuxième procédé après que le signal d'accès aléatoire a été transmis selon le premier procédé, le circuit de commande est configuré pour configurer la puissance de transmission augmentée dans le premier procédé comme puissance de transmission pour le signal d'accès aléatoire dans le deuxième procédé.

9. Terminal selon la revendication 1, dans lequel,
lorsque des informations de commande incluant un paramètre ayant trait à une commande de puissance de transmission sont indiquées par une station de base (100) lorsque le signal d'accès aléatoire est à retransmettre, le circuit de transmission est configuré en outre pour transmettre, selon le paramètre, le signal d'accès aléatoire qui repose sur le premier procédé.

10. Terminal selon la revendication 9, dans lequel

les informations de commande incluent en outre des informations indiquant un du premier procédé et du deuxième procédé, et
le circuit de commande est configuré en outre pour sélectionner un du premier procédé et du deuxième procédé selon les informations de commande.

**11.** Terminal selon la revendication 1, dans lequel

le circuit de commande est configuré en outre pour augmenter une première puissance de transmission pour la partie de préambule et une deuxième puissance de transmission pour la partie de données lorsque le signal d'accès aléatoire est à retransmettre.

**12.** Terminal selon la revendication 11, dans lequel

des informations sur la qualité de canal désignent la première puissance de transmission et la deuxième puissance de transmission, et

le circuit de commande est configuré en outre pour sélectionner le premier procédé lorsqu'à la fois la première puissance de transmission et la deuxième puissance de transmission sont supérieures ou égales à un seuil, ou pour sélectionner le deuxième procédé lorsqu'au moins une de la première puissance de transmission et la deuxième puissance de transmission est inférieure au seuil.

**13.** Terminal selon la revendication 11, dans lequel

une quantité d'augmentation de la puissance de transmission est différente entre le premier procédé et le deuxième procédé.

**14.** Terminal selon la revendication 11, dans lequel,

lorsque le signal d'accès aléatoire est à retransmettre selon le deuxième procédé après que le signal d'accès aléatoire a été transmis selon le premier procédé, le circuit de commande est configuré pour configurer la puissance de transmission augmentée dans le premier procédé comme puissance de transmission pour le signal d'accès aléatoire dans le deuxième procédé.

**15.** Terminal selon la revendication 1, dans lequel

le circuit de commande est configuré pour sélectionner le deuxième procédé lorsqu'un nombre de retransmissions du signal d'accès aléatoire selon le premier procédé dépasse une valeur de limite supérieure.

**16.** Procédé de transmission, comprenant :

une sélection d'un d'un premier procédé et d'un deuxième procédé selon une qualité de canal,

dans lequel la qualité de canal est une qualité reçue d'un signal de liaison descendante, le premier procédé étant destiné à une transmission d'un signal d'accès aléatoire incluant une partie de préambule et une partie de données, le deuxième procédé étant destiné à une transmission du signal d'accès aléatoire incluant la partie de préambule mais n'incluant pas la partie de données ; et

une transmission du signal d'accès aléatoire selon le procédé sélectionné, **caractérisé en ce que** :

dans le premier procédé, la transmission du signal d'accès aléatoire est effectuée en utilisant une ressource associée à un signal de la pluralité de signaux de liaison descendante pour lequel la qualité reçue est supérieure ou égale à un premier seuil,

dans le deuxième procédé, la transmission du signal d'accès aléatoire est effectuée en utilisant une ressource associée à un signal de la pluralité de signaux de liaison descendante pour lequel la qualité reçue est supérieure ou égale à un deuxième seuil, et

le premier seuil est différent du deuxième seuil, et

le procédé de transmission comprend en outre :

une retransmission du signal d'accès aléatoire selon le premier procédé lorsqu'une réponse du signal d'accès aléatoire n'est pas reçue dans une période spécifiée après la transmission du signal d'accès aléatoire selon le premier procédé.

FIG. 1

FIG. 2

200

209 217

| Controller | → | Transmitter |

FIG. 3

FIG. 4

EP 4 443 955 B1

FIG. 5

FIG. 6

FIG. 7

FIG. 8

FIG. 9

EP 4 443 955 B1

FIG. 10

EP135948I

FIG. 11

FIG. 12

**EP 4 443 955 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018279376 A1

**Non-patent literature cited in the description**

- NR; Physical channels and modulation (Release 15). *3GPP TS 38.211*, December 2018
- NR; Multiplexing and channel coding (Release 15). *3GPP TS 38.212*, December 2018
- NR; Physical layer procedure for control (Release 15). *3GPP TS 38.213*
- NR; Physical layer procedures for data (Release 15). *3GPP TS 38.214*, December 2018
- NR; NR and NG-RAN overall description; Stage 2 (Release 15). *3GPP TS 38.300*, December 2018
- NR; Medium access control (MAC) protocol specification (Release 15). *3GPP TS 38.321*, December 2018

- NR; Radio resource control (RRC) protocol specification (Release 15). *3GPP TS 38.331*, December 2018
- **B. BERTENYI** ; **S. NAGATA** ; **H. KOOROPATY** ; **X. ZHOU** ; **W. CHEN** ; **Y. KIM** ; **X. DAI** ; **X. XU**. 5G NR radio interface. *Journal of ICT*, 2018, vol. 6 and 2, 31-58
- **ZTE CORPORATION, SANECHIPS**. New work item: 2-step RACH for NR. *RP-182881*, December 2018
- **ZTE, SANECHIPS**. Considerations on 2-Step RACH Procedures. *3GPP Draft; R1-1901627*, 16 February 2019